# EUROPÄISCHE PATENTSCHRIFT

(11) **EP 4 374 122 B1**
(45) Veröffentlichungstag und Bekanntmachung des Hinweises auf die Patenterteilung: **25.09.2024**
(21) Anmeldenummer: 23718780.2
(22) Anmeldetag: 20.04.2023
(51) Int. Cl.: F27B 1/00, C04B 2/12, C04B 7/44, F27B 7/34, F27B 15/14, F27D 99/00

(54) **VERFAHREN UND VORRICHTUNG ZUM BRENNEN VON MINERALISCHEM, CARBONATISCHEM ROHMATERIAL**
METHOD AND DEVICE FOR BURNING MINERAL, CARBONATIC RAW MATERIAL
PROCÉDÉ ET DISPOSITIF DE COMBUSTION DE MATIÈRE PREMIÈRE MINÉRALE ET CARBONATÉE

(30) Priorität: 20.04.2022 DE 102022203884
(43) Veröffentlichungstag der Anmeldung: 29.05.2024
(73) Patentinhaber: Johann Bergmann GmbH & Co, 95359 Kasendorf (DE); Löffler, Joachim, 96524 Föritztal (DE)
(72) Erfinder: GROPPWEIS, Sebastian Stephan, 95359 Kasendorf (DE); LÖFFLER, Joachim, 96524 Föritztal (DE)
(74) Vertreter: Dr. Solf & Zapf Patent- und Rechtsanwalts PartG mbB
(86) Internationale Anmeldenummer: PCT/EP2023/060351
(87) Internationale Veröffentlichungsnummer: WO 2023/203160

(56) Entgegenhaltungen:
- EP-A1- 2 818 227
- US-A1- 2014 161 708
- US-A1- 2020 048 146

## Beschreibung

Die vorliegende Erfindung betrifft ein Verfahren und eine Vorrichtung zum Brennen von mineralischem, carbonatischem, körnigem bzw. schüttfähigem Rohmaterial bzw. Brenngut, insbesondere Gestein, vorzugsweise zum Brennen von Kalkstein und/oder Magnesit und/oder Dolomit zum Herstellen von Branntkalk und/oder Magnesiakauster und/oder Sintermagnesia und/oder Doloma.

Vorzugsweise betrifft die Erfindung ein Kalkbrennverfahren und eine Vorrichtung mit einem Kalkofen zur Herstellung von Branntkalk.

Unter dem Begriff Brennen versteht man verschiedene thermische Verfahren bei der Herstellung von Materialien und Fertigung von Halbzeug. Der Begriff Brennen wird häufig bei der Herstellung von keramischen Materialien, in der Pulvermetallurgie und bei der Alkoholherstellung verwendet. Beim Brennen wird durch Zufuhr von Energie eine chemische Reaktion oder ein Umbau der Kristallstruktur eines Materials erreicht.

Bei einem körnigen Material handelt es sich bekanntermaßen um ein Schüttgut. Ein Schüttgut ist ein trockenes Gemenge, das aus Körnern besteht und in einer schüttfähigen Form vorliegt. Sind die Körner sehr fein, handelt es sich um ein Pulver oder Mehl. Insbesondere weist ein Mehl eine Korngröße ≤ 400 µm auf. Sind die Körner auch grob, handelt es sich um ein stückiges (Roh)material. Insbesondere weist ein stückiges Material auch Körner mit einer Korngröße von > 5 mm auf.

Sofern im Rahmen der Erfindung nicht anders angegeben, wird die Korngröße insbesondere gemäß DIN 66165-1:2016-08 bestimmt. Bei mehlförmigem Material mit einer Korngröße ≤ 400 µm wird die Korngröße mittels Luftstrahlsiebanalyse bestimmt. Bei stückigem Rohmaterial kann die Korngröße ab einer Korngröße > 50 mm auch mittels eines Messschiebers gemessen werden.

Carbonatisches Rohmaterial besteht bezüglich seiner chemischen Zusammensetzung überwiegend (> 50 M.-%), bevorzugt > 70 M.-%, besonders bevorzugt > 80 M.-%, ganz besonders bevorzugt > 85 M.-%, aus dem/den jeweiligen Carbonat(en). Ein Rohmaterial, welches lediglich carbonatische Verunreinigungen enthält, ist kein carbonatischer Rohstoff. Die Zusammensetzung wird insbesondere gemäß DIN EN196-2:2013-10 bestimmt.

Branntkalk bzw. gebrannter Kalk (calciniertes CaO) wird bekanntermaßen durch Brennen bzw. Calcinieren von Kalkstein (CaCOs) in einem Kalkofen hergestellt. Diesen Vorgang bezeichnet man als Kalkbrennen. Ab einer Temperatur von etwa 800 °C wird Calciumcarbonat entsäuert, das heißt Kohlendioxid wird ausgetrieben und es entsteht Calciumoxid:

CaCOs ---> CaO + CO₂

In analoger Weise entsteht Doloma bzw. kaustisch gebrannter Dolomit bzw. calcinierter Dolomit (calciniertes CaO MgO) durch Brennen bzw. Calcinieren von Dolomitstein (CaMg(CO₃)₂).

Magnesia (Magnesiakauster bzw. kaustische Magnesia bzw. Kaustermagnesia und Sintermagnesia) besteht zum größten Teil aus Magnesiumoxid (MgO). Es wird überwiegend durch thermische Dekarbonatisierung bzw. Entsäuerung von Magnesit bei Temperaturen von 600-800°C (Magnesiakauster) bzw. 1800-2200°C (Sintermagnesia) hergestellt. Als Magnesit bzw. Rohmagensit wird natürliches Magnesiumcarbonat (MgCO₃) bezeichnet. Der Entsäuerungsprozess des Magnesit beginnt bei ca. 550-800 °C, dabei entsteht Magnesiakauster. Um Sintermagnesia zu erhalten, wird der Magnesiakauster in einer oder zwei Phasen bei 1800-2200 °C weiter thermisch behandelt. Sintermagnesia kann aber auch in einem einstufigen Brennprozess direkt aus dem Rohmagnesit hergestellt werden.

Bei allen beschriebenen Brennprozessen entsteht eine große Menge an CO₂. Das im Abgas enthaltene CO₂ stammt dabei teilweise aus den Rohmaterialien und teilweise aus der Verbrennung der fossilen Brennstoffe. Somit tragen die Brennprozesse erheblich zur globalen Klimaerwärmung bei.

Infolgedessen gibt es mehrere Ansätze zur Verwertung und Speicherung des im Abgas enthaltenen CO₂ (siehe zum Beispiel Dr. F. Ausfelder, Dr. A. Bazzanelle, DECHEMA e.V., Diskussionspapier "Verwertung und Speicherung von CO₂"). Beispielsweise wird das CO₂ vom Abgas abgetrennt. Dies erfolgt z.B. durch Ab- oder Adsorption, Ca-basiertes chemical looping mittels Membranen oder mittels des Oxyfuel-Verfahrens. Beim Oxyfuel-Verfahren wird im Gegensatz zur konventionellen Verbrennung mit Luft der Brennstoff mit reinem Sauerstoff (also ohne Stickstoff) verbrannt. Im Idealfall der stöchiometrischen Verbrennung eines reinen Kohlenwasserstoffs mit Sauerstoff entstehen als Verbrennungsprodukte nur CO₂ und Wasser. Der CO₂-Anteil liegt bei etwa 80 Vol.-%. Nach Auskondensieren des Wassers bliebe nur reines CO₂ zurück. Dies ist allerdings aufgrund seiner hohen Reinheit nur bei der Verwendung von Erdgas möglich.

Das EU-finanzierte Projekt LEILAC 2 (Low Emissions Intensity Lime And Cement) (https://cordis.europa.eu/proiect/id/884170/de) erprobt eine neue Technologie, die bestehende Prozessabläufe überarbeitet, indem der Kalkstein direkt erhitzt wird. Dieses Projekt baut auf den Erfolgen des Horizont 2020-Projekts LEILAC auf (dem es gelang, 5 % der CO₂-Prozessemissionen einer durchschnittlichen Zementfabrik abzuscheiden) und plant dessen Leistung mit einem einsetzbaren und skalierbaren Modul auf etwa 20 % der CO₂-Prozessemissionen einer durchschnittlichen Zementfabrik hochzuskalieren.

Gemäß der DE 10 2010 019 330 A1 wird beim Brennen von Carbonaten im Brennstoffgemisch technischer Sauerstoff oder durch technischen Sauerstoff angereicherte Luft als Oxidationsmittel eingesetzt und das bei der Verbrennung entstehende CO₂-haltige Abgas wenigstens teilweise als Verdünnungsgas in das Brennstoffgemisch zurückgeführt und/oder als Kühlgas in eine Kühlzone am unteren Ende des Kalzinierofens eingeleitet.

Die EP 2 818 227 A1 offenbart ein Verfahren zum Betreiben eines gebrannten Kalk, Dolomit, Magnesia oder Zement aus carbonathaltigen Rohstoffen erzeugenden Schachtofens, insbesondere ein Verfahren zum Betreiben eines Schachtofens zur Erzeugung von gebranntem Kalk oder Zement, wobei der Schachtofen zumindest eine obere Rohstoff-Einlaufzone, mindestens eine mittlere Brennzone und mindestens eine untere Brenngut-Auslaufzone aufweist, gekennzeichnet durch die folgenden Maßnahmen:
a) Verbrennen eines Brennstoffgemisches aus einem kohlenstoffhaltigen Brennstoff, z. B. einem fossilen Brennstoff, vorzugsweise aus Methan oder Methanol, und industriell erzeugtem technischem Sauerstoff in der Brennzone des Schachtofens und Calcinieren des carbonathaltigen Rohstoffs in der Brennzone und oberhalb davon, wobei zusätzlich in die Brennzone und/oder die Auslaufzone des Schachtofens Kohlenstoffdioxid jeweils als Substitut der nach dem Stand der Technik üblicherweise verwendeten stickstoffhaltigen, atmosphärischen Luft, eingeleitet wird,
b) Entnahme eines wenigstens 60, insbesondere wenigstens 80, vorzugsweise über 90 Vol.-% Kohlenstoffdioxid enthaltenden Abgases, resultierend aus der Verbrennung des Brennstoffs, z. B. des Methans oder Methanols, mit Sauerstoff und dem zugeführten Kohlenstoffdioxid, an der Einlauföffnung der Rohstoff-Einlaufzone und Einleiten des Abgases in einen Abgasspeicher, wobei das gemäß Merkmal a) zugeführte Kohlenstoffdioxid dem Kohlenstoffdioxid enthaltenden Abgasspeicher entnommen wurde,
c) Erzeugen von Methan oder Methanol in einem Methanisierungs- oder Methanolisierungsreaktor aus aus dem Abgasspeicher dem Reaktor zugeführten Kohlendioxid und dem Reaktor zugeführten Wasserstoff und Einleitung des Methans oder Methanols in einen Methan- oder Methanolspeicher,
d) Zuführen eines kohlenstoffhaltigen z. B. fossilen Brennstoffs und/oder eines an sich bekannten Ersatzbrennstoffs wie Altöl oder Tiermehl zur Brennzone des Schachtofens und/oder vorzugsweise Entnahme von Methan oder Methanol aus dem Methan- oder Methanolspeicher und Zuführen des Methans oder Methanols als Brennstoff zur Brennzone des Schachtofens,
e) Optional Erzeugung von Wasserstoff und Sauerstoff aus vorzugsweise dem öffentlichen Wassernetz entnommenen Wasser durch Elektrolyse in einer mit aus dem öffentlichen Stromnetz und/oder einer werksanlageneigenen Stromerzeugungsanlage entnommenem elektrischen Strom betriebenen Elektrolyseanlage und Speichern des Wasserstoffs in einem Wasserstoffspeicher und des Sauerstoffs in einem Sauerstoffspeicher,
f) Zuführen von Wasserstoff in den Methan- oder Methanolreaktor für die Durchführung der Methanisierung oder Methanolisierung insbesondere durch Entnahme von Wasserstoff aus dem Wasserstoffspeicher und/oder Verwendung von von Dritten bezogenem Wasserstoff,
g) Zuführen von Sauerstoff in die Brennzone und/oder die Auslaufzone des Schachtofens insbesondere durch Entnahme von Sauerstoff aus dem Sauerstoffspeicher und/oder durch Verwendung von von Dritten bezogenem Sauerstoff.

Die US 2020/0048146 A1 offenbart einen Kalkofen, bei dem das zu brennende Material mit CO₂ erhitzt wird. Das CO₂ wird zuvor in einem Wärmespeicherungsofenset erhitzt. Das Erhitzen erfolgt dadurch, dass in einem Wärmespeicherungsofen Gichtgas und Verbrennungsluft in den Wärmespeicherungsofen eingeleitet und verbrannt werden. Das dabei entstehende heiße Abgas wird verwendet, um Wärmespeicherungsmaterialien in dem Wärmespeicherungsofen zu erhitzen. Anschließend wird der Brenner ausgeschaltet und zu erhitzendes CO₂ eingeleitet, welches durch die Wärmespeichermaterialien des Wärmespeicherungsofens erhitzt wird. Zum Kühlen wird Luft verwendet, welche dazu in der Kühlzone in den Brennofen eingeleitet wird.

Die US 2014/0161708 A1 offenbart eine Vorrichtung zur Herstellung von CO₂ aus Kalkstein in einem Drehrohrofen, wobei zum Erhitzen des Kalksteins eine Widerstandsheizung verwendet wird, welche mit Atomenergie betrieben wird. Aus dem hergestellten CO₂ wird unter Zugabe von Wasserstoff ein synthetischer Kraftstoff hergestellt. Eingebracht wird das Rohmaterial in den Drehrohrofen dann, wenn der Einlass mit dem Einlassrohr gekoppelt ist. Und der Branntkalk wird am unteren Ende des Drehrohrofens durch das Auslassrohr herausgeführt, wenn die Tür mit dem Auslassrohr gekoppelt ist. An das Auslassrohr schließt sich zudem ein Wärmetauscher an, in dem der Branntkalk mittels Kühlluft gekühlt wird.

Die nachveröffentlichte DE 10 2021 202 485 A1 offenbart einen Brennofen, bei dem die für die Entsäuerung notwendige Energie beispielsweise durch eine elektrisch betriebene Heizvorrichtung bereitgestellt werden kann. Zudem kann das Abgas einer Sequestrierung und/oder einer weiteren industriellen Verwertung, wie beispielsweise der Herstellung von Soda, Zucker oder gefälltem Calciumcarbonat zugeführt werden.

Aufgabe der vorliegenden Erfindung ist die Bereitstellung eines Verfahrens und einer Vorrichtung zum Brennen von mineralischem, carbonathaltigem bzw. carbonatischem Rohmaterial bzw. Brenngut, vorzugsweise zum Brennen von Kalkstein und/oder Magnesit und/oder Dolomit zum nachhaltigen Herstellen von Branntkalk und/oder Magnesiakauster und/oder Sintermagnesia und/oder Doloma.

Zudem sollen ein effizientes Abgasverwertungsverfahren und eine Abgasverwertungsvorrichtung für CO₂-haltiges Abgas bereit gestellt werden.

Diese Aufgaben werden durch Vorrichtung gemäß Anspruch 1 und ein Verfahren gemäß Anspruch 18 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch und stark vereinfacht eine Abgasverwertungseinrichtung
- Figur 2:: Schematisch und stark vereinfacht einen Brennofen mit Abgasrückführung
- Figur 3:: Schematisch und stark vereinfacht einen Brennofen mit Abgasrückführung gemäß einer weiteren Ausführungsform
- Figur 4:: Schematisch und stark vereinfacht einen Brennofen mit Abgasrückführung gemäß einer weiteren Ausführungsform
- Figur 5:: Schematisch und stark vereinfacht einen Brennofen mit Abgasrückführung gemäß einer weiteren Ausführungsform
- Figur 6:: Schematisch und stark vereinfacht einen Brennofen gemäß einer weiteren Ausführungsform

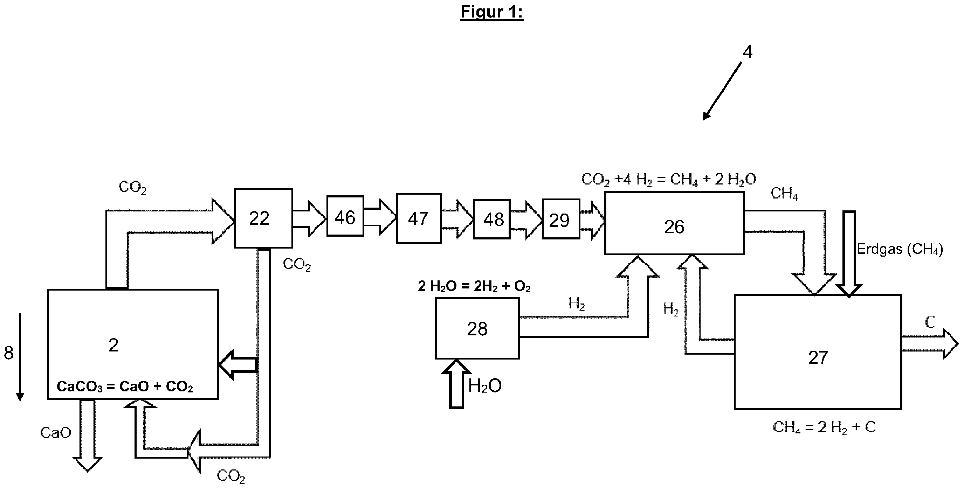

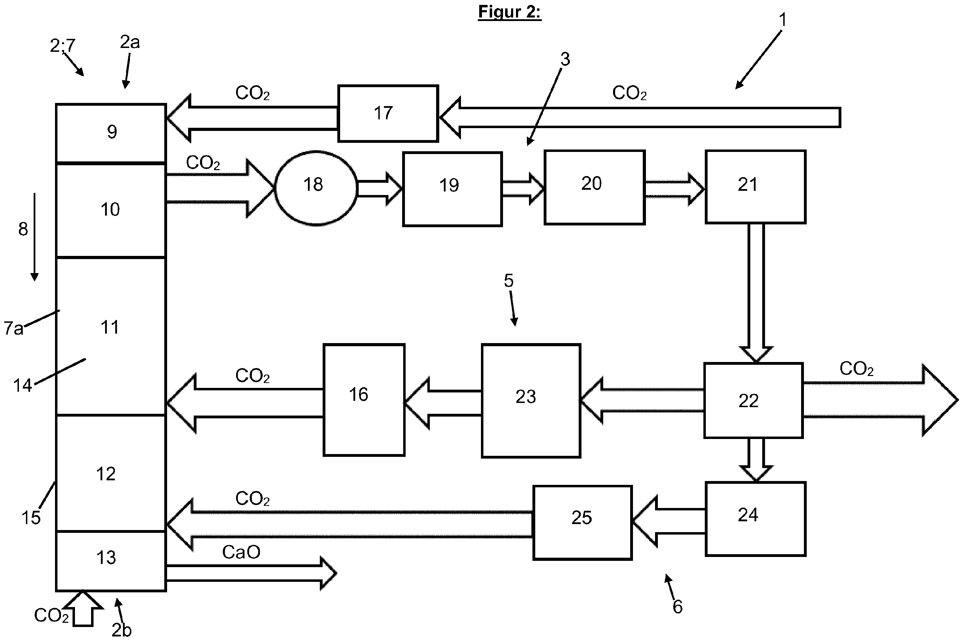

Die erfindungsgemäße Vorrichtung 1 (Figur 1, 2) weist einen Brennofen 2, eine Abgasrückführeinrichtung 3, eine Abgasverwertungseinrichtung 4, eine Heißgaszuführeinrichtung 5 und eine Kühlgaszuführeinrichtung 6 auf.

Wie bereits erläutert, dient die erfindungsgemäße Vorrichtung 1 vorzugsweise zur Herstellung von Branntkalk und/oder Magnesiakauster und/oder Sintermagnesia und/oder Doloma aus mineralischem, carbonatischem Rohmaterial bzw. Brenngut, vorzugsweise durch Brennen von Kalkstein und/oder Magnesit und/oder Dolomit.

Vorzugsweise dient die Vorrichtung 1 zur Herstellung von Branntkalk. Infolgedessen handelt es sich bei dem Brennofen 2 vorzugsweise um einen Kalkofen.

Zudem handelt es sich bei dem Brennofen 2 gemäß einer ersten Ausführungsform der Erfindung (Fig. 2) um einen Einkammer-Schachtofen bzw. Normalschachtofen 7 mit einem einzigen vertikalen Ofenschacht 7a.

Der Brennofen 2, insbesondere der Normalschachtofen 7, weist ein oberes Ofenende 2a, an dem das zu brennende Rohmaterial aufgegeben wird, und ein unteres Ofenende 2b, an dem das gebrannte, insbesondere calcinierte, Material, bevorzugt der Branntkalk, aus dem Brennofen 2 abgeführt wird, auf. Das untere Ofenende 2b ist somit dem oberen Ofenende 2a in eine vertikale Materialtransportrichtung 8 nachgeordnet.

Der Brennofen 2, insbesondere der Normalschachtofen 7, weist zudem in Materialtransportrichtung 8 gesehen einander nachgeordnet eine Rohmaterialschleuse 9, eine Vorwärmzone 10, eine Brennzone 11, eine Kühlzone 12 und eine Austragsschleuse 13 zum Abführen des gebrannten Materials, insbesondere des Branntkalks, aus dem Brennofen 2 auf. Die Rohmaterialschleuse 9 ist somit am oberen Ofenende 2a und die Austragsschleuse 13 ist am unteren Ofenende 2b angeordnet.

Zudem weist der Normalschachtofen 7 in an sich bekannter Weise einen Ofeninnenraum bzw. Ofenbrennraum 14 und einen diesen umgebenden Ofenmantel 15 auf. Der Ofeninnenraum 14 ist zudem in an sich bekannter Weise gasdicht abgeschlossen.

Die erfindungsgemäß vorhandene Rohmaterialschleuse 9 dient in an sich bekannter Weise zum chargenweisen Einbringen des zu brennenden Rohmaterials in den Ofenschacht 7a. Sie ist derart ausgebildet, dass sie, insbesondere nach dem Befüllen mit dem Rohmaterial, gasdicht verschließbar ist.

Die Austragsschleuse 13 dient in an sich bekannter Weise zum chargenweisen Austragen des gebrannten Materials aus dem Ofenschacht 7a. Sie ist ebenfalls derart ausgebildet, dass sie gasdicht verschließbar ist.

Am unteren Ofenende 2b wird zudem relativ kühles Ofenprozessgas bzw. Kühlgas zugeführt. Das Kühlgas weist vorzugsweise eine Temperatur von -20 bis 150°C, bevorzugt 5 bis 80 °C, auf. Insbesondere wird das Kühlgas am unteren Ende der Kühlzone 12 zugeführt.

Und am oberen Ofenende 2a wird das Ofenabgas abgeführt. Das Gas durchströmt somit den Brennofen 2 in eine zur Materialtransportrichtung 8 entgegengesetzte Richtung. Der Brennofen 2 wird also im Gegenstromprinzip betrieben.

Erfindungsgemäß ist nun vorgesehen, dass der Brennofen 2 in einer reinen CO₂-Atmosphäre betrieben wird. Das heißt das sich im Ofeninnenraum 14 befindliche Ofenprozessgas weist einen CO₂-Gehalt von ≥ 80 M.-%, besonders bevorzugt ≥ 90 M.-%, ganz besonders bevorzugt ≥ 98 M.-% auf.

Der CO₂-Gehalt der Gase wird im Rahmen der Erfindung in an sich bekannter Weise mittels bekannter Messsonden gemessen, vorzugsweise im Rahmen einer Bypass-Messung. Das bedeutet, dass die Messsonde in einem Bypass angeordnet ist.

Selbstverständlich muss der CO₂-Gehalt im Ofeninnenraum 14 dabei nicht völlig konstant sein. Er weist aber überall den angegebenen Mindestgehalt an CO₂ auf. Dies wird gewährleistet, indem alle in den Brennofen 2 eingeleiteten Ofenprozessgase zu ≥ 80 M.-%, besonders bevorzugt ≥ 90 M.-%, ganz besonders bevorzugt ≥ 98 M.-%, aus CO₂ bestehen.

Insbesondere weisen die eingeleiteten Ofenprozessgase keinen Sauerstoff auf.

Zudem ist vorzugsweise vorgesehen, dass keine Verbrennung von Brennstoffen innerhalb des Brennofens 2 zur Erzeugung der für das Brennen des Rohmaterials notwendigen Wärme stattfindet. Bei einer Verbrennung reagiert eine Substanz chemisch mit Sauerstoff oder (selten) einem anderen Gas.

Keine Verbrennung innerhalb des Brennofens 2 bzw. im Ofeninnenraum 14 bedeutet, es findet keine Verbrennung statt, bei der die sich im Brennofen 2 bzw. im Ofeninnenraum 14 befindlichen Ofenprozessgase reagieren bzw. beteiligt sind. Bzw. es findet keine Verbrennung statt, welche die im Ofeninnenraum 14 herrschende Ofenatmosphäre beeinflusst. Der Brennofen 2 weist also keine Brennstoffheizung mit einem Brenner zur direkten Beheizung des Rohmaterials auf.

Es kann aber gegebenenfalls eine von der Ofenatmosphäre entkoppelte Verbrennung stattfinden, z.B. in einem im Ofeninnenraum 14 angeordneten, aber vom Ofeninnenraum 14 gasdicht abgeschlossenen Raum. Dadurch erfolgt eine indirekte Beheizung des Rohmaterials.

Für die Wärmeerzeugung wird zudem vorzugsweise, bevorzugt ausschließlich, elektrische Energie, vorzugsweise aus Ökostrom bzw. grünem Strom verwendet.

Gemäß einer ersten Ausführungsform der Erfindung (Fig. 2) wird die für das Brennen des Rohmaterials notwendige Wärme durch Zuführen von Heißgas in die Brennzone 11 eingebracht. Insbesondere wird das Heißgas am unteren Ende der Brennzone 11 an einer Heißgaseinlassstelle 34 zugeführt. Wie bereits erläutert, handelt es sich bei dem Heißgas um Ofenprozessgas mit dem zuvor angegebenen hohen CO₂-Gehalt. Zudem weist das Heißgas vorzugsweise eine Temperatur von 800 bis 1250°C, bevorzugt 900 bis 1100 °C, auf. Das Heißgas wird dazu in einer Heißgasheizeinrichtung 16 der Heizgaszuführeinrichtung 5 aufgeheizt, worauf weiter unten näher eingegangen wird.

Das Brennen in dem Brennofen 2 erfolgt damit wie folgt:
Zunächst wird das zu brennende, schüttfähige, stückige Rohmaterial, vorzugsweise der Kalkstein, in die Rohmaterialschleuse 9 gefüllt. Das Rohmaterial weist vorzugsweise eine minimale Korngröße ≥15 mm, bevorzugt ≥ 30 mm, und/oder eine maximale Korngröße ≤ 180 mm, bevorzugt ≤ 120 mm, auf.

Sobald die Rohmaterialschleuse 9 befüllt ist, wird sie gasdicht verschlossen und erfindungsgemäß mit Spülgas gespült. Wie bereits erläutert, handelt es sich bei dem Spülgas um Ofenprozessgas mit dem zuvor angegebenen hohen CO₂-Gehalt. Zudem weist das Spülgas vorzugsweise einen Überdruck von 200 bis 1800 mbar, bevorzugt 200 bis 800 mbar, auf. Dazu weist die Vorrichtung 1 vorzugsweise eine Spülgasverdichtungseinrichtung 17 auf. Vorzugsweise handelt es sich bei der Spülgasverdichtungseinrichtung 17 um ein Drehkolbengebläse oder einen Schraubenverdichter oder ein Hybridgebläse, das heißt eine Kombination aus den beiden vorgenannten Gebläsen.

Zudem stammt das Spülgas vorzugsweise aus einer Prozessgasspeichereinrichtung 22 oder aus Gasflaschen (nicht dargestellt). Es weist aber immer den zuvor angegebenen hohen CO₂-Gehalt auf.

Die Rohmaterialschleuse 9 wird solange mit dem Spülgas gespült, bis sie vollständig mit diesem befüllt ist. Dann wird der Spülgasstrom abgestellt und die Rohmaterialschleuse 9 zum Ofeninnenraum 14 geöffnet, so dass Rohmaterial in den Ofeninnenraum 14, insbesondere in die Vorwärmzone 10, hinein fällt. Die Verbindung zwischen der Rohmaterialschleuse 9 und dem Ofeninnenraum 14 ist selbstverständlich gasdicht. Dadurch, dass die Rohmaterialschleuse 9 mit dem Spülgas befüllt ist, gelangt keine Umgebungsluft in den Ofeninnenraum 14.

In der Vorwärmzone 10 wird das Rohmaterial in an sich bekannter Weise durch das entgegen die Materialtransportrichtung 8 durch die Vorwärmzone 10 strömende, von der Brennzone 11 kommende, Gas vorgewärmt. Dieses Gas enthält dabei einerseits die zugeführten Ofenprozessgase und andererseits die beim Brennen des Rohmaterials entstehenden Gase.

Das Rohmaterial wandert im Gegenstrom, nämlich in Materialtransportrichtung 8, durch die Vorwärmzone 10 durch und gelangt in die Brennzone 11.

In der Brennzone 11 wird das Rohmaterial durch das Heißgas, welches das Rohmaterial entgegen die Materialtransportrichtung 8 durchströmt derart aufgeheizt, dass es gebrannt, insbesondere entsäuert, wird.

Beim Brennen von Kalkstein, Magnesit und Dolomit entsteht somit in an sich bekannter Weise hauptsächlich CO₂. Aufgrund von Verunreinigungen des Rohmaterials können beim Brennen aber auch andere Gase, insbesondere Wasserdampf entstehen.

Das Material wandert im Gegenstrom, nämlich in Materialtransportrichtung 8, durch die Brennzone 11 durch und gelangt in die Kühlzone 12.

In der Kühlzone 12 wird das gebrannte Material durch das Kühlgas, welches das gebrannte Material entgegen die Materialtransportrichtung 8 durchströmt abgekühlt.

Und von der Kühlzone 12 gelangt das abgekühlte, gebrannte Material schließlich in die Austragsschleuse 13, welche das Material aus dem Brennofen 2 ausschleust. Bevor die Austragsschleuse 13 dazu geöffnet wird, wird sie gasdicht vom darüber angeordneten Ofeninnenraum 14 getrennt, damit keine Umgebungsluft in diesen eindringen kann.

Nach dem Ausschleusen des gebrannten Materials wird die Austragsschleuse 13 analog zur Rohmaterialschleuse 9 mit Spülgas gespült, bis sie vollständig mit diesem befüllt ist. Dann wird der Spülgasstrom abgestellt und die Austragsschleuse 13 zum Ofeninnenraum 14 geöffnet. Die Verbindung zwischen der Austragsschleuse 13 und dem Ofeninnenraum 14 ist selbstverständlich gasdicht.

Wie bereits erläutert, wird zudem das Ofenabgas am oberen Ofenende 2a aus dem Brennofen 2 in die Abgasverwertungseinrichtung 4 abgeführt. Das Ofenabgas hat dabei vorzugsweise eine Temperatur von 20 bis 250°C, bevorzugt 50 bis 100°C. Zudem wird das Ofenabgas permanent abgeführt oder chargenweise, wenn z.B. ein bestimmter Überdruck, z.B. 600 mbar, im Ofeninneren 14 überschritten wird. Dies wird insbesondere über einen Drucksensor und ein auf Basis der Messungen des Drucksensors gesteuertes Ventil geregelt.

Des Weiteren weist das Ofenabgas vorzugsweise einen CO₂-Gehalt von ≥ 80 M.-%, besonders bevorzugt ≥ 90 M.-%, ganz besonders bevorzugt ≥ 98 M.-%, auf.

Die Abgasrückführeinrichtung 3 weist einander nachgeordnet vorzugsweise eine erste Entstaubungseinrichtung 18, vorzugsweise eine Entfeuchtungseinrichtung 19, vorzugsweise eine zweite Entstaubungseinrichtung 20, vorzugsweise eine Abgasverdichtungseinrichtung 21 und die Prozessgasspeichereinrichtung bzw. Abgasspeichereinrichtung 22 auf.

Die erste und zweite Entstaubungseinrichtung 18;20 dienen jeweils zum Abtrennen von Staub aus dem Ofenabgas.

Vorzugsweise weist die erste Entstaubungseinrichtung 18 einen oder mehrere Zyklone auf. Zyklone werden auch Fliehkraftabscheider genannt.

Vorzugsweise weist die zweite Entstaubungseinrichtung 20 einen oder mehrere Filter, bevorzugt Filtersäcke, auf.

Die Entfeuchtungseinrichtung 19 dient zum Abtrennen von Wasser und anderen feuchten Bestandteilen aus dem Ofenabgas. Vorzugsweise handelt es sich um einen Kondensatableiter, bevorzugt mit Kältetrockner.

Die Abgasverdichtungseinrichtung 21 dient zum Verdichten des Ofenabgases. Die Verdichtung dient dazu, um Druckverluste auszugleichen. Vorzugsweise weist die Abgasverdichtungseinrichtung 21 einen Schraubenverdichter oder ein Drehkolbengebläse oder ein Hybridgebläse oder einen pneumatischen Staudruckverdichter auf.

Die Abgasspeichereinrichtung 22 dient in an sich bekannter Weise zum Zwischenspeichern des Abgases. Die Abgasspeichereinrichtung 22 dient insbesondere als Systempuffer. Vorzugsweise wird das Abgas mit ca. 1 bar gespeichert.

Von der Abgasspeichereinrichtung 22 wird ein Abgasstrom in die Heißgaszuführeinrichtung 5, ein Abgasstrom in die Kühlgaszuführeinrichtung 6 und ein Abgasstrom in die Abgasverwertungseinrichtung 4 abgeführt.

Die Heißgaszuführeinrichtung 5 weist eine Heißgasverdichtungseinrichtung 23 und die sich daran anschließende Heißgasheizeinrichtung 16 auf.

Die Heißgasverdichtungseinrichtung 23 dient zum Verdichten des aus der Abgasspeichereinrichtung 22 abgeführten Gases auf insbesondere 200 bis 1800 mbar, bevorzugt 200 bis 800 mbar. Die Verdichtung dient dazu, das Heißgas mit ausreichend Druck durch den Ofeninnenraum 14 zu fördern. Vorzugsweise handelt es sich bei der Heißgasverdichtungseinrichtung 23 um einen Schraubenverdichter oder ein Drehkolbengebläse oder Hybridgebläse oder einen pneumatischen Staudruckverdichter.

Vorzugsweise wird der Brennofen 2 mit Überdruck betrieben. Auch dies dient dazu, die CO₂-Atmosphäre im Ofeninnenraum 14 aufrechtzuerhalten. Denn dadurch wird verhindert, dass von außen Gase in den Ofeninnenraum 14 eindringen. Der Überdruck im Ofeninnenraum 14 beträgt vorzugsweise 50 bis 1200 mbar, bevorzugt 200 bis 800 mbar.

Von der Heißgasverdichtungseinrichtung 23 strömt das Gas dann zur Heißgasheizeinrichtung 16.

Die Heißgasheizeinrichtung 16 weist vorzugsweise zumindest eine elektrisch betriebene Heizung auf, vorzugsweise eine Widerstandsheizung. Bei einer Widerstandsheizung wird bekanntermaßen Wärme erzeugt, indem ein aus elektrisch leitfähigem Material bestehendes Heizwiderstandselement von Strom durchflossen wird und sich durch die Joulesche Wärme erhitzt. Die Widerstandsheizung weist deshalb zumindest ein Heizwiderstandselement auf, welches von dem aufzuheizenden Gas umströmt wird und dieses aufheizt.

Die Heißgasheizeinrichtung 16 kann aber auch alternativ oder zusätzlich zumindest einen Wärmetauscher aufweisen. Der Wärmetauscher weist in an sich bekannter Weise eines oder mehrere Wärmetauscherrohre auf, die mit einem heißen Medium durchströmt und von dem aufzuheizenden Gas umströmt werden. Gemäß einer Ausführungsform der Erfindung kann zum Beispiel in den Wärmetauscherrohren eine Verbrennung, vorzugsweise von Erdgas oder einem fossilen Brennstoff stattfinden.

Wie bereits erläutert, dient die Heißgasheizeinrichtung 16 zur Aufheizung des Gases auf eine Temperatur, die hoch genug ist, um das Rohmaterial zu brennen bzw. auf die notwendige Brenntemperatur aufzuheizen. Mittels der Heißgasheizeinrichtung 16 wird also das Heißgas erzeugt, welches dann in den Brennofen 2, am unteren Ende der Brennzone 11, eingeführt wird.

Die Kühlgaszuführeinrichtung 6 weist eine Kühlgasverdichtungseinrichtung 24 und eine sich daran anschließende Kühlgaskühleinrichtung 25 auf.

Die Kühlgasverdichtungseinrichtung 24 dient zum Verdichten des aus der Abgasspeichereinrichtung 22 abgeführten Gases auf insbesondere 200 bis 1800 mbar, bevorzugt 200 bis 800 mbar. Die Verdichtung dient zum Ausgleich von Druckverlusten. Vorzugsweise handelt es sich bei der Kühlgasverdichtungseinrichtung 24 um einen Schraubenverdichter oder ein Drehkolbengebläse oder ein Hybridgebläse oder einen pneumatischen Staudruckverdichter.

Von der Kühlgasverdichtungseinrichtung 24 strömt das Gas dann zur Kühlgaskühleinrichtung 25. Die Kühlgaskühleinrichtung 25 dient zum Abkühlen des verdichteten Gases, insbesondere auf -20 bis 150°C. Dazu weist die Kühlgaskühleinrichtung 25 vorzugsweise mindestens einen Wärmetauscher auf. Mittels der Kühlgaskühleinrichtung 25 wird also das Kühlgas bereit gestellt, welches dann in den Brennofen 2, am unteren Ende der Kühlzone 12, eingeführt wird.

Die erfindungsgemäße Abgasverwertungseinrichtung 4 (Fig. 1) weist eine Methanisierungseinrichtung 26, vorzugsweise eine Methanpyrolyseeinrichtung 27 und gegebenenfalls eine Elektrolyseeinrichtung 28 sowie gegebenenfalls eine Gasreinigungseinrichtung 29 auf.

Zudem weist die Abgasverwertungseinrichtung 4 vorzugsweise vor der Methanisierungseinrichtung 26 einen Hochdruckverdichter 46, einen Hochdruckspeicher 47 und einen Druckminderer 48 auf. Der Druckminderer dient dazu, den Druck exakt auf den für die Methanisierungseinrichtung 26 benötigten Druck abzusenken.

Die Gasreinigungseinrichtung 29, die vor der Methanisierungseinrichtung 26 angeordnet ist, dient zur Abgasreinigung und stellt insbesondere sicher, dass kein Sauerstoff in die Methanisierungseinrichtung 26 gelangt. Sie trennt insbesondere das CO₂ von den übrigen Bestandteilen, insbesondere dem Sauerstoff, des Ofenabgases. Hierzu weist die Gasreinigungseinrichtung 29 vorzugsweise in an sich bekannter Weise zumindest einen Membranfilter auf.

Die Methanisierungseinrichtung 26 dient zur Umwandlung des CO₂ in Methan (CH₄). Insbesondere wird das Methan gemäß folgender Gleichung aus Wasserstoff und Kohlenstoffdioxid erzeugt:

CO₂ + 4H₂ = CH₄ + 2H₂O

Die Methanisierungseinrichtung 26 weist vorzugsweise Mittel zur Methanogenese bzw. mikrobiellen Methanbildung bzw. biologischen Methanbildung auf. Bei der Methanogenese wird Methan durch den Stoffwechsel von Lebewesen, die als Methanogene oder Methanbildner bezeichnet werden, gebildet. Vorzugsweise handelt es sich bei den Methanbildnern um Archaeen. Die Methanogenese wird dabei in einem Bioreaktor mithilfe der Methanbildner, vorzugsweise der Archaeen durchgeführt.

Infolgedessen weist die Methanisierungseinrichtung 26 vorzugsweise zumindest einen Bioreaktor mit Archaeen auf. Der Bioreaktor wird zudem vorzugsweise mit Überdruck betrieben, bevorzugt mit einem Überdruck von 1 bis 100 bar, besonders bevorzugt 10 bis 35 bar, ganz besonders bevorzugt 10 bis 20 bar.

Die Methanisierungseinrichtung 26 kann zudem auch alternativ oder zusätzlich Mittel zur technischen bzw. chemischen Methanisierung aufweisen. Insbesondere weist die Methanisierungseinrichtung 26 hierzu zumindest einen Membranreaktor auf. Insbesondere erfolgt die Methanisierung in dem Membranreaktor durch die Sabatier-Reaktion.

Die Methanogenese ist aber bevorzugt.

Vorzugsweise stammt nun der zur Methanisierung verwendete Wasserstoff zumindest teilweise aus der Methanpyrolyseeinrichtung 27. Die Methanpyrolyseeinrichtung 27 dient zur Umwandlung des in der Methanisierungseinrichtung 26 erzeugten Methans in Wasserstoff und festen Kohlenstoff. In diesem Zug spricht man von "türkisem Wasserstoff". Für die Methanpyrolyse wird Wärmeenergie benötigt, die mit Strom erzeugt werden kann. Der Stromverbrauch ist dabei deutlich geringer als bei der Elektrolyse.

Insbesondere wird das Methan gemäß folgender Gleichung umgewandelt:

CH₄ = 2H₂ + C

Vorzugsweise weist die Methanpyrolyseeinrichtung 27 zumindest einen mit geschmolzenem Metall, vorzugsweise mit geschmolzenem Zinn, gefüllten Flüssigmetall-Blasensäulenreaktor auf.

In dem Flüssigmetall-Blasensäulenreaktor wird das Methangas am Reaktorboden eingeleitet und dort in Form von Bläschen freigesetzt. Die Bläschen steigen aufgrund des Dichteunterschieds nach oben auf und stellen eine Art Mikro-Reaktorkammer für die Aufspaltung bei der Pyrolyse dar. Durch das heiße Metall erreicht das Methan schnell die erforderliche Reaktionstemperatur, so dass die Spaltung noch während des Aufsteigens der Bläschen erfolgt. An der Bläschenoberfläche lagert sich der freigesetzte Kohlenstoff ab. Kommen die Bläschen am oberen Ende des Flüssigmetallreaktors an, platzen sie auf und setzen ein Gemisch aus Wasserstoff, Kohlenstoff und gegebenenfalls Restmethan frei. Der feste Kohlenstoff wird dann aus dem Gasgemisch abgeschieden. Und der erzeugte Wasserstoff wird mittels Gastrennverfahren separiert, sodass schließlich zwei Reaktionsprodukte einzeln vorliegen. Das Restmethan wird dem Pyrolysekreislauf des Flüssigmetall-Blasensäulenreaktors erneut hinzugefügt.

Die Methanpyrolyseeinrichtung 27 kann aber auch Mittel zur Durchführung der Methanpyrolyse mittels des Kvaerner-Verfahrens aufweisen. Die Kohlenwasserstoffe werden beim Kvaerner-Verfahren bekanntermaßen in einem Plasmabrenner bei etwa 1600 °C in reinen Kohlenstoff und Wasserstoff getrennt.

Falls notwendig, kann der Methanpyrolyseeinrichtung 27 zusätzlich zu dem aus der Methanisierungseinrichtung 26 stammendem Methan zudem Erdgas, insbesondere aus einer Pipeline oder einem Erdgasspeicher, zugeführt werden.

Wie bereits erläutert, kann die Abgasverwertungseinrichtung 4 auch zusätzlich oder alternativ die Elektrolyseeinrichtung 28 aufweisen. Diese dient zur (zusätzlichen) Bereitstellung von Wasserstoff für die Methanisierung. Mittels der Elektrolyseeinrichtung 28 wird Wasserstoff gemäß folgender Gleichung aus Wasser erzeugt:

2H₂O = 2H₂ + O₂

Dabei wird für die Elektrolyse vorzugsweise Wasser aus einer Pipeline oder einem Wasserspeicher verwendet.

Des Weiteren kann der Wasserstoff für die Methanisierung auch aus einem Wasserstoffspeicher und/oder einem Wasserstoffnetz bereitgestellt werden.

Zudem kann der zusätzliche Wasserstoff auch mittels des LOHC Verfahrens (Liquid organic hydrogen carrier) bereit gestellt werden. Mit Hilfe von Hydrierung wird H₂ an eine Flüssigkeit chemisch angedockt, kann dann mittels Tankschiff oder Pipeline transportiert werden und vor Ort wieder dehydriert werden.

Vorteil des erfindungsgemäßen Verfahrens und der erfindungsgemäßen Vorrichtung 1 mit der Abgasverwertungseinrichtung 4 ist, dass das beim Brennen entstehende CO₂ nicht in die Atmosphäre gelangt, sondern in der Methanisierungseinrichtung 26 zunächst in Methan umgewandelt wird, welches dann wiederum vorzugsweise durch die Methanpyrolyse in festen Kohlenstoff umgewandelt wird. Fester Kohlenstoff ist im Gegensatz zu Kohlenstoffdioxid aber nicht klimaschädlich und kann z.B. als Düngemittel verwendet werden.

Vorteil der Methanpyrolyse ist zudem, dass diese 80 % weniger Energie als die Elektrolyse benötigt. Dadurch werden wiederum auch Kosten eingespart.

Die Hälfte des in der Methanisierungseinrichtung 26 verbrauchten Wasserstoffs wird zudem durch die Methanpyrolyse zurück gewonnen.

Durch den Betrieb des Brennofens 2 mit reiner CO₂-Atmosphäre und das Brennen des Brennguts ohne Verbrennung von Brennstoff ist das Ofenabgas sehr viel reiner und weist kaum Verunreinigungen auf, so dass auf die Abgasreinigung verzichtet werden kann. Gegebenenfalls muss die Abgasreinigung nur dann durchgeführt werden, wenn die Verunreinigungen sich im Ofenabgas angereichert haben. Insbesondere für den Bioreaktor ist es wichtig, dass das zu methanisierende Ofenabgas wenig Verunreinigungen enthält, da die Archaeen diesbezüglich empfindlich sind. Auch der mögliche Verzicht auf die Abgasreinigung spart Energie und Kosten.

Vorteil der Archaeen ist zudem, dass sie zwar empfindlich gegenüber Sauerstoff im Abgas, aber unempfindlich gegenüber einem hohen Schwefelgehalt im Abgas sind.

Da vorzugsweise die gesamte Energie, die zum Betrieb der Vorrichtung 1, insbesondere des Brennofens 2 und der Abgasverwertungseinrichtung 4, notwendig ist, elektrische Energie ist, vorzugsweise aus grünem Strom, ist die gesamte Vorrichtung 1 nahezu klimaneutral.

Des Weiteren kann die Effizienz des Brennofens 2 durch den Betrieb ausschließlich in CO₂-Atmosphäre gesteigert werden, da die Taupunkttemperatur gesenkt werden kann, wodurch wiederum Energie eingespart werden kann. Denn bei der Verbrennung von Erdgas und anderen Brennstoffen entsteht Wasserdampf. Zudem enthalten die Brennstoffe oft Schwefel, welcher mit dem Wasser schwefelige Säure bildet, so dass der Ofen korrodiert. Ohne die Verbrennung von Brennstoffen im Ofeninnenraum 14 treten diese Probleme nicht auf.

Die oben beschriebene Arbeitsweise des Brennofens 2 bezieht sich selbstverständlich auf den normalen Betrieb des Brennofens 2. Während einer Anfangsphase kann es sein, dass die CO₂-Konzentration im Ofeninnenraum 14 und den Gasen noch nicht der angegebenen Konzentration entspricht. In diesem Fall, wird der Brennofen 2 so lange wie oben beschrieben betrieben, bis durch Aufkonzentration die gewünschte CO₂-Konzentration erreicht ist. Erst wenn diese erreicht ist, wird allerdings die Abgasverwertungseinrichtung 4 in Betrieb genommen. Vorher wird das überschüssige Abgas in die Atmosphäre geleitet.

Alternativ dazu kann aber der Ofeninnenraum 14 vor Inbetriebnahme mit Spülgas mit der gewünschten CO₂-Konzentration gespült werden. Das Spülgas stammt beispielsweise aus der Abgasspeichereinrichtung 22 oder Gasflaschen.

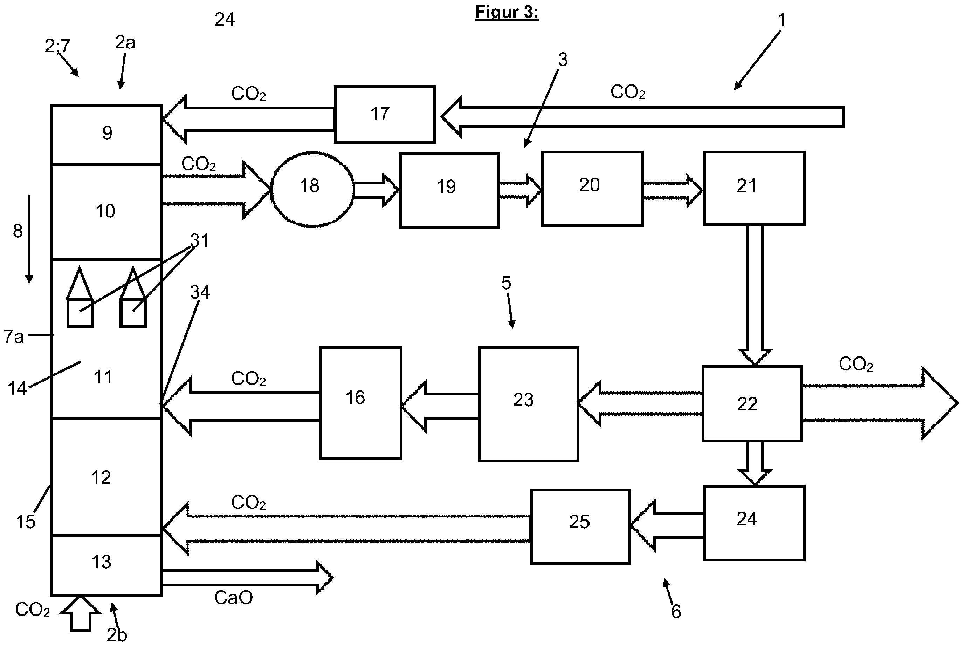

Gemäß einer weiteren Ausführungsform der Erfindung (Fig. 3) weist der Brennofen 2 eine, vorzugsweise im Ofeninnenraum 14 angeordnete, Brenngutheizeinrichtung 30 zum Aufheizen des Rohmaterials bzw. Brennguts in der Brennzone 11 auf die zum Brennen notwendige Temperatur auf. Die Brenngutheizeinrichtung 30 erzeugt die Wärme dabei ohne Verbrennung von Brennstoffen im Ofeninnenraum 14.

Die Brenngutheizeinrichtung 30 weist keine Brennstoffheizung mit Brenner zum direkten Beheizen des Rohmaterials auf.

Zudem ist die Brenngutheizeinrichtung 30 vorzugsweise am oberen Ende der Brennzone 11 angeordnet.

Vorzugsweise ist die Brenngutheizeinrichtung 30 elektrisch betrieben. Sie weist also zumindest eine elektrisch betriebene Heizung auf.

Bevorzugt weist die Brenngutheizeinrichtung 30 zumindest eine Widerstandsheizung auf. Die Widerstandsheizung weist vorzugsweise zumindest ein, bevorzugt mehrere, elektrische(s) Heizwiderstandselement(e) 31, vorzugsweise Heizstäbe oder Heizwendeln auf. Die Heizwiderstandselemente 31 sind im Ofeninnenraum 14 angeordnet bzw. ragen in diesen hinein. Insbesondere ragen die Heizwiderstandselement(e) 31 in die sich im Ofeninnenraum 14 befindliche Rohmaterialschüttung hinein. Vorzugsweise sind deshalb zudem Prallbleche 32 oder dergleichen mechanische Schutzelemente zum mechanischen Schutz der Heizwiderstandselemente 31 vor dem Rohmaterialstrom vorhanden. Zudem können mehrere Heizwiderstandselemente 31 nebeneinander und/oder übereinander angeordnet sein. Zudem können die Heizwiderstandselemente 31 auch über die gesamte Brennzone 11 verteilt sein.

Alternativ oder zusätzlich zu der elektrischen Heizung kann die Brenngutheizeinrichtung 30 auch zumindest einen Wärmetauscher aufweisen (nicht dargestellt). Insbesondere können mehrere Wärmetauscher nebeneinander und/oder übereinander angeordnet sein. Zudem können die Wärmetauscher auch über die gesamte Brennzone 11 verteilt sein. Auch die Wärmetaucher sind vorzugsweise mechanisch vor dem Rohmaterialstrom geschützt.

Ein Wärmetauscher weist in an sich bekannter Weise eines oder mehrere Wärmetauscherrohre auf, die mit einem heißen Medium durchströmt und von dem aufzuheizenden Rohmaterial und dem Ofenprozessgas umströmt werden. Gemäß einer Ausführungsform der Erfindung kann zum Beispiel in den Wärmetauscherrohren eine Verbrennung, z.B. von Erdgas oder einem fossilen Brennstoff stattfinden (indirekte Beheizung des Rohmaterials). Oder es kann zumindest eine Festoxidbrennstoffzelle (solid oxide fuel cell, SOFC) in den Wärmetaucherrohren angeordnet sein.

Des Weiteren kann die elektrisch betriebene Brenngutheizeinrichtung 30 auch zumindest eine Mikrowellenheizung aufweisen, welche Mittel zum Aufheizen des Rohmaterials mittels Mikrowellen aufweist, und/oder zumindest eine Lichtbogenheizung mit im Ofeninnenraum 14 angeordneter Anode und Kathode.

Dadurch, dass auch bei der Ausführungsform mit der Brenngutheizeinrichtung 30 keine Verbrennung von Brennstoffen direkt im Ofeninneren 14 des Brennofens 2 stattfindet, wird das Ofenabgas nicht verunreinigt durch beim Verbrennen entstehende Gase und unverbrannten Sauerstoff.

Zudem wird auch für die Wärmeerzeugung mittels der elektrisch betriebenen Brenngutheizeinrichtung 30 ausschließlich elektrische Energie, vorzugsweise aus Ökostrom bzw. grünem Strom, verwendet.

Dabei kann es auch ausreichen, lediglich die Brenngutheizeinrichtung 30 zum Aufheizen des Brennguts vorzusehen und auf die Einleitung des Heißgases in die Brennzone 11 zu verzichten.

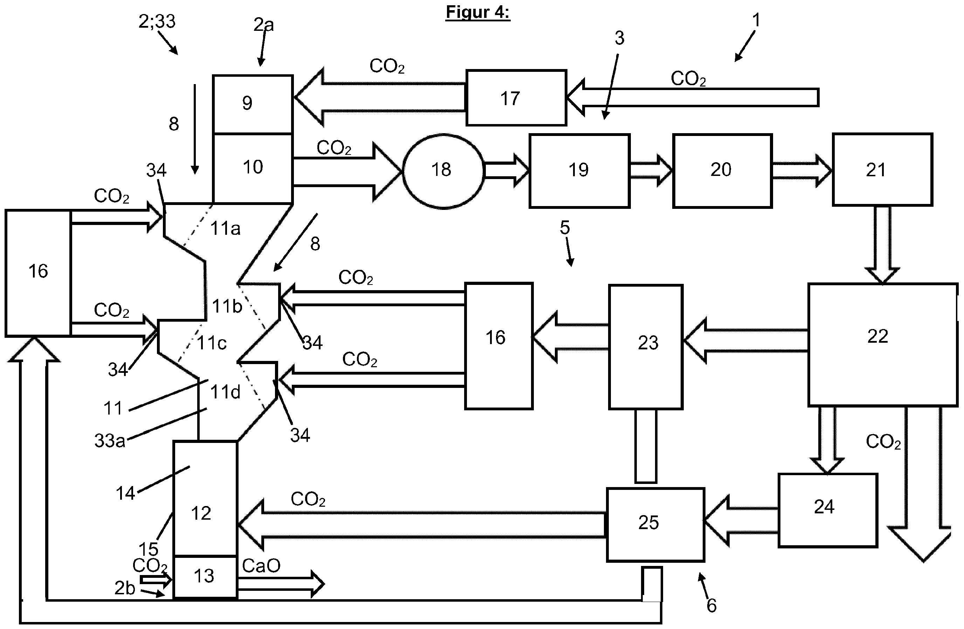

Gemäß einer weiteren Ausführungsform der Erfindung handelt es sich bei dem Brennofen 2 um einen Schrägschachtofen 33 (Fig. 4). Auch der Schrägschachtofen 33 wird in an sich bekannter Weise im Gegenstromprinzip betrieben.

Der Schrägschachtofen 33 weist in an sich bekannter Weise eine Brennzone 11 mit mehreren übereinander angeordneten Brennzonenbereichen 11a-d auf. Die

Brennzonenbereiche sind zudem so ausgebildet, dass das Brenngut die Brennzone 11 auf einem mäanderförmigen Weg durchläuft. Der Ofenschacht 33a ist somit im Bereich der Brennzone 11 mäanderformig ausgebildet. Zudem weist vorzugsweise jeder Brennzonenbereich 11a-d jeweils eine Heißgaseinlassstelle 34 zum Einführen von Heißgas auf. Dadurch wird das Brenngut optimal erhitzt.

Vorzugsweise liegen sich die Heißgaseinlassstellen 34 der direkt übereinander angeordneten Brennzonenbereiche 11a-d dabei jeweils gegenüber. Das heißt, es liegen immer zwei Heißgaseinlassstellen 34 übereinander. Dies insbesondere aus Platzgründen.

Vorzugsweise weist die Heißgaszuführeinrichtung 5 zudem eine Heißgasverdichtungseinrichtung 23 und zwei sich jeweils an die Heißgasverdichtungseinrichtung 23 anschließende Heißgasheizeinrichtungen 16 auf. Und von jeder der Heißgasheizeinrichtungen 16 werden jeweils zwei Heißgasströme abgeführt und in einen der Brennzonenbereiche 11a-d eingeleitet.

Im Rahmen der Erfindung liegt es dabei selbstverständlich auch, dass die Brennzonenbereiche 11a-d zusätzlich oder alternativ zu den Heißgaseinlassstellen 34 eine Brenngutheizeinrichtung 30 (nicht dargestellt) aufweisen. Beispielsweise kann auch ein Teil der Brennzonenbereiche 11a-d eine Brenngutheizeinrichtung 30 und ein Teil eine Heißgaseinlassstelle 34 aufweisen.

Handelt es sich um eine elektrisch betriebene Brenngutheizeinrichtung 30 mit Widerstandsheizung oder Lichtbogenheizung, sind die Heizwiderstandselemente bzw. Anode und Kathode vorzugsweise so angeordnet, dass sie zwar im Ofeninnenraum 14 aber außerhalb der Rohmaterialschüttung angeordnet sind. Dies gilt auch für die Wärmetauscherrohre. Dadurch wird der mechanische Verschleiß der jeweiligen Heizelemente erheblich reduziert.

Vorteil des Schrägschachtofens 33 ist eine gleichmäßigere Wärme bzw. Energieverteilung. Dies sorgt für eine bessere Einflussmöglichkeit auf die Qualität des gebrannten Materials.

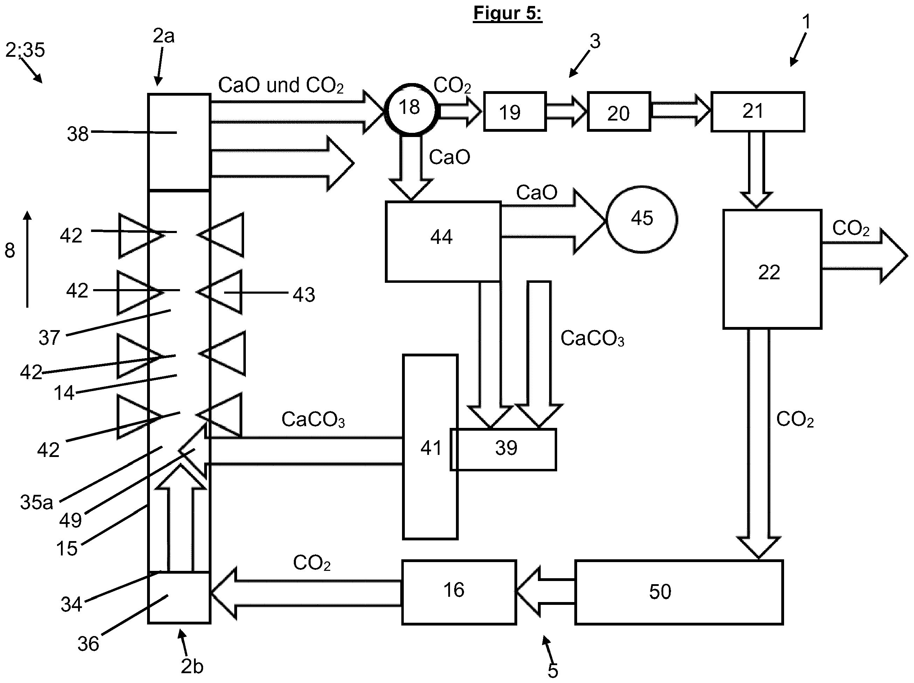

Gemäß einer weiteren Ausführungsform der Erfindung handelt es sich bei dem Brennofen 2 um einen Schwebeschachtofen 35 (Fig. 5). Der Schwebeschachtofen 35 weist ebenfalls einen einzigen vertikalen Ofenschacht 35a auf.

Im Gegensatz zu den anderen genannten Brennöfen 2;7;33 wird der Schwebeschachtofen 35 im Gleichstromprinzip betrieben. Das heißt, die Materialtransportrichtung 8 entspricht der Strömungsrichtung des Ofenprozessgases. Zudem verläuft die Materialtransportrichtung 8 von unten nach oben. Der Materialauslass ist somit am oberen Ofenende 2a.

Des Weiteren wird der Schwebeschachtofen 35 nicht für das Brennen von stückigem Rohmaterial, sondern von mehlförmigem Rohmaterial, vorzugsweise von Kalksteinmehl, verwendet. Das mehlförmige Rohmaterial weist eine Korngröße ≤ 400 µm, vorzugsweise ≤ 200 µm, bevorzugt ≤ 90 µm auf.

Aus diesem Grund ist das Brenngut im Schwebeschachtofen 35 im Ofenprozessgas dispergiert bzw. schwebt im Schwebeschachtofen 35. Das Brenngut wird also mittels des Ofenprozessgases durch den Schwebeschachtofen 35 durch transportiert. Es liegt ein Aerosol aus Ofenprozessgas und Brenngut und/oder gebranntem Material vor.

Die Vorrichtung 1 gemäß der weiteren Ausführungsform (Fig. 5) weist ebenfalls eine Abgasrückführeinrichtung 3, eine Abgasverwertungseinrichtung 4 und eine Heißgaszuführeinrichtung 5 auf.

Der Schwebeschachtofen 35 weist von unten nach oben gesehen eine Heißgasverteileinrichtung 36, eine Brennzone 37 und eine Rekuperationszone 38 auf. Zudem weist der Schwebeschachtofen 35 eine Rohmaterialschleuse 39 und eine Rohmaterialeinlassstelle 49 auf, die oberhalb der Heißgasverteileinrichtung 36 und unterhalb der Brennzone 37 und neben dem Ofenschacht 35a angeordnet ist.

Die Brennzone 37 weist zudem eine oder mehrere, vorzugsweise bis 30, in Materialtransportrichtung 8 hintereinander angeordnete Brennzonenbereiche 42 auf. Die Brennzonenbereiche 42 weisen jeweils eine Brenngutheizeinrichtung 43 auf.

Vorzugsweise weist die Brenngutheizeinrichtung 43 zumindest eine elektrisch betriebene Heizung, bevorzugt eine Lichtbogenheizung oder eine Widerstandsheizung oder eine Mikrowellenheizung, und/oder zumindest einen Wärmetauscher auf. Analog wie bei den anderen Brennöfen 2;7;33 sind die Heizwiderstandselemente 31 der Widerstandsheizung bzw. die Anode und Kathode bzw. die Wärmetauscherrohre im Ofeninnenraum 14 angeordnet.

Das Brennen in dem Schwebeschachtofen 35 erfolgt nun wie folgt:
Mittels der Heißgaszuführeinrichtung 5 wird Heißgas in die Heißgasverteileinrichtung 36 am unteren Ofenende 2b an der Heißgaseinlassstelle 34 in den Ofenschacht 35a gefördert. Das Heißgas wird zuvor in der Heißgasheizeinrichtung 16 vorzugsweise auf 300 bis 800°C, bevorzugt 550 bis 750°C, aufgeheizt. Vorzugsweise weist die Heißgaszuführeinrichtung 5 zudem ein vor der Heißgasheizeinrichtung 16 angeordnetes Fördergebläse 50 auf.

Von der Heißgasverteileinrichtung 36 wird es auf den gesamten Ofenquerschnitt verteilt und strömt in Materialtransportrichtung 8 durch den Ofenschacht 35a nach oben.

Das zu brennende, schüttfähige, mehlförmige Rohmaterial, vorzugsweise das Kalksteinmehl, wird in die Rohmaterialschleuse 39 gefüllt.

Sobald die Rohmaterialschleuse 39 befüllt ist, wird sie gasdicht verschlossen und erfindungsgemäß mit Spülgas gespült (nicht dargestellt). Bei dem Spülgas handelt es sich ebenfalls um Ofenprozessgas mit dem angegebenen, hohen CO₂- Gehalt. Zudem weist das Spülgas vorzugsweise einen Druck von 200 bis 1800 mbar auf. Dazu weist die Vorrichtung 1 vorzugsweise eine Spülgasverdichtungseinrichtung 17 (in Figur 5 nicht dargestellt) auf. Vorzugsweise handelt es sich bei der Spülgasverdichtungseinrichtung 17 um ein Drehkolbengebläse oder einen Schraubenverdichter oder ein Hybridgebläse oder einen pneumatischen Staudruckverdichter.

Die Rohmaterialschleuse 39 wird solange mit dem Spülgas gespült, bis sie vollständig mit diesem befüllt ist. Dann wird die der Spülgasstrom abgestellt und die Rohmaterialschleuse 39 zum Ofeninnenraum 14 geöffnet, so dass Rohmaterial in den Ofeninnenraum 14 hinein gefördert werden kann.

Vorzugsweise ist zwischen der Rohmaterialschleuse 39 und dem Ofeninnenraum 14 noch eine Vorheizeinrichtung 41 angeordnet, die zum Vorheizen des Rohmaterials dient, bevor es in den Ofeninnenraum 14 gegeben wird. Vorzugsweise wird das Rohmaterial auf 300 bis 800°C vorgewärmt.

Die Vorheizeinrichtung 41 ist vorzugsweise elektrisch betrieben und weist bevorzugt zumindest eine elektrische Heizung, vorzugsweise eine Widerstandsheizung, auf. Sie kann aber auch alternativ oder zusätzlich einen Wärmetauscher aufweisen.

Des Weiteren kann die Vorheizeinrichtung 41 auch zumindest eine Mikrowellenheizung aufweisen.

Sobald das Rohmaterial in den Ofeninnenraum 14 gelangt, wird es von dem Heißgasstrom in Schwebe gehalten und in Materialtransportrichtung 8 mitgenommen.

Dadurch gelangt das Rohmaterial in die Brennzone 37, wird durch diese durch transportiert und währenddessen gebrannt.

Nach der Brennzone 37 gelangt das gebrannte Material in die Rekuperationszone 38, in der es abkühlt indem es die Wärmeenergie an einen Wärmetauscher oder an einen Wärmespeicher abgibt der wiederum zur Vorwärmung des Rohmaterials eingesetzt wird.

Aus der Rekuperationszone 38 wird das gebrannte Material zusammen mit dem Ofenabgas, in dem es dispergiert ist, in die Abgasrückführeinrichtung 3 abgeführt.

In der ersten Entstaubungseinrichtung 18 wird das Ofenabgas vom gebrannten, staubförmigen Material abgetrennt.

Das Ofenabgas wird danach wie oben beschrieben in die Abgasspeichereinrichtung 22 gefördert und von dieser in die Heißgaszuführeinrichtung 5 und die erfindungsgemäße Abgasverwertungseinrichtung 4 gefördert.

Das in der ersten Entstaubungseinrichtung 18 abgetrennte, gebrannte Material wird vorzugsweise in einer Sichtungseinrichtung 44 gesichtet. Insbesondere wird vollständig gebranntes, insbesondere vollständig calciniertes, Material von nicht vollständig gebranntem, insbesondere nicht vollständig calciniertem, Material getrennt. Vorzugsweise weist die Sichtungseinrichtung 44 einen Windsichter auf, der schweres ungebranntes Material von leichterem gebrannten Material trennt, indem leichtes gebranntes Material durch Luft beispielsweise nach außen gedrückt wird und schweres gebranntes Material nach unten fällt ohne abgelenkt zu werden.

Das nicht vollständig gebrannte Material wird dann zusammen mit dem Rohmaterial der Rohmaterialschleuse 39 zugeführt.

Und das vollständig gebrannte Material wird vorzugsweise in eine Speichereinrichtung 45 gefördert.

Vorteil des Schwebeschachtofens 35 ist die Verwendung von extrem feinen Material, es tritt praktisch kein Zwangsanfall von Unterkorn auf. Außerdem kann der Schwebeschachtofen wesentlich schneller an- und abgefahren werden als herkömmliche Öfen.

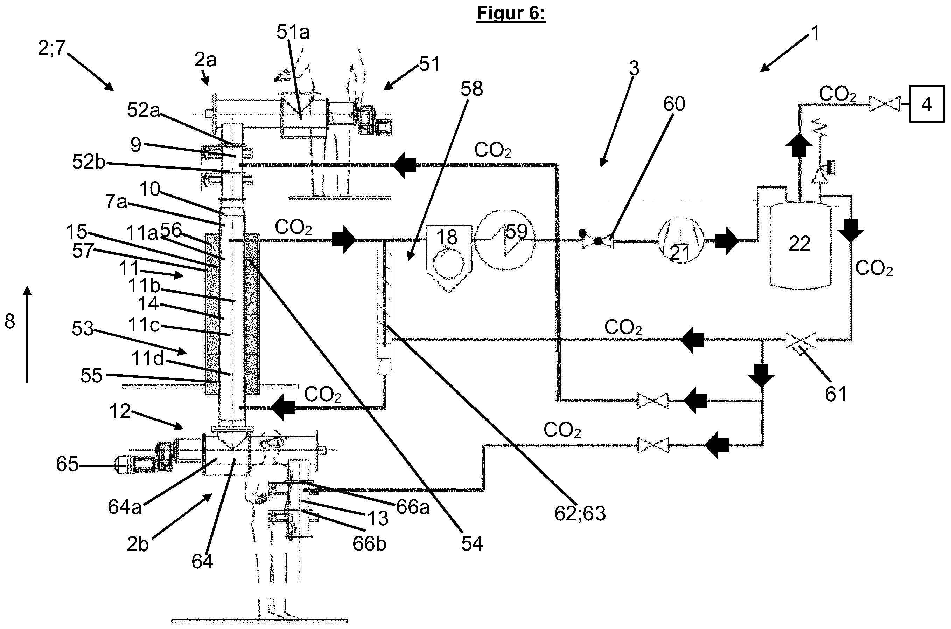

Gemäß einer weiteren Ausführungsform der Erfindung handelt es sich bei dem Brennofen 2 ebenfalls um einen Normalschachtofen 7 (Fig. 6).

Der Normalschachtofen 7 weist eine Rohmaterialzuführeinrichtung 51, die Rohmaterialschleuse 9, gegebenenfalls die Vorwärmzone 10, die Brennzone 11, die Kühlzone 12 und die Austragsschleuse 13 auf.

Zudem weist die Vorrichtung 1 gemäß der weiteren Ausführungsform die Abgaswertungseinrichtung 4 und die Heißgaszuführeinrichtung 5, aber vorzugsweise keine Kühlgaszuführeinrichtung 6 auf.

Die Rohmaterialzuführeinrichtung 51 dient zur Zuführung des Rohmaterials zur Rohmaterialschleuse 9. Sie weist vorzugsweise eine Zuführschnecke 51a, vorzugsweise eine Trogschnecke, mit einem Wärmetauscher auf. Dadurch wird das Rohmaterial in der Zuführschnecke 51a vorgewärmt. Der Wärmetauscher der Zuführschnecke 51a weist vorzugsweise außen um eine Schneckenwandung der Zuführschnecke 51a herum angeordnete Wärmetauscherrohre auf (nicht dargestellt), die mit einem Wärmetauschermedium, vorzugsweise Thermalöl, durchströmt werden. Die Zuführschnecke 51a kann aber auch eine Elektroheizung mit mindestens einer um die Schneckenwandung der Zuführschnecke 51a herum angeordneten Heizwendel aufweisen.

Die Rohmaterialschleuse 9 weist eine obere und eine untere Pendelklappe 52a;52b auf. Die beiden Pendelklappen 52a;52b weisen eine geöffnete und eine geschlossene Stellung auf. In der geschlossenen Stellung verschließen sie die Rohmaterialschleuse 9. Ist die obere Pendelklappe 52a geöffnet, kann die Rohmaterialschleuse 9 von oben mittels der Rohmaterialzuführeinrichtung 51 mit Rohmaterial befüllt werden. Ist die untere Pendelklappe 52c geöffnet, fällt das Rohmaterial aus der Rohmaterialschleuse 9 in den Ofeninnenraum 14, insbesondere die Vorwärmzone 10. Zum Öffnen und Schließen der beiden Pendelklappen 52a;52b weist der Normalschachtofen 7 jeweils entsprechende Antriebsmittel, vorzugsweise hydraulische und/oder pneumatische Antriebsmittel und/oder einen Elektromotor und/oder einen Servomotor, auf.

Der Normalschachtofen 7 weist zudem eine elektrisch betriebene Brenngutheizeinrichtung 53 zum Aufheizen des Rohmaterials bzw. Brennguts in der Brennzone 11 auf die zum Brennen notwendige Temperatur auf.

Die Brenngutheizeinrichtung 53 weist pro Brennzone 11a-d jeweils zwei Widerstandheizungen in Form von Heizmanschetten 54 auf, die außen um den, vorzugsweise aus Stahl bestehenden, Ofenmantel 15 herum angeordnet sind.

Die Heizmanschetten 54 weisen jeweils eine innere Heizschale 55, eine außen um die Heizschale 55 herum angeordnete Dämmschale 56 und vorzugsweise eine außen um die Dämmschale 56 herum angeordnete Manschettenaußenschale 57 auf.

Die Heizschalen 55 weisen jeweils zumindest ein elektrisches Heizwiderstandselement, vorzugsweise zumindest eine Heizwendel, bevorzugt mehrere Heizwendeln, auf (nicht dargestellt).

Mittels der Heizmanschetten 54 wird somit der Ofenmantel 15 beheizt und die von den Heizmanschetten 54 erzeugte Wärme wird durch den Ofenmantel 15 mittels Wärmeleitung in den Ofeninnenraum 14 übertragen.

Die Heißgaszuführeinrichtung 5 weist vorzugsweise eine Heißgasumwälzeinrichtung bzw. Ofenabgasumwälzeinrichtung 58, die erste Entstaubungseinrichtung 18, einen Wärmetauscher 59 zum Abkühlen des Abgases, eine Drossel 60, die Abgasverdichtungseinrichtung 21, die Abgasspeichereinrichtung 22 und eine weitere Drossel 61 auf.

Die Heißgasumwälzeinrichtung bzw. Ofenabgasumwälzeinrichtung 58 dient zum Umwälzen eines Teils des am oberen Ende aus der Brennzone 11 austretenden heißen Ofenabgases. Insbesondere dient die Heißgasumwälzeinrichtung 58 zum Abführen des heißen Ofenabgases am oberen Ende der Brennzone 11 und zum Rückführen des heißen Ofenabgases am unteren Ende der Brennzone 11. Hierzu weist die Heißgasumwälzeinrichtung 58 entsprechende Heißgasleitungen und mindestens eine Heißgasantriebseinrichtung bzw. Ofenabgasantriebseinrichtung 62 zur Beschleunigung des Heißgases bzw. Ofenabgases auf. Vorzugsweise handelt es sich bei der Heißgasantriebseinrichtung 62 um eine Coandadüse 63 oder ein Hochtemperaturgebläse (nicht dargestellt).

Der Wärmetauscher 59 dient zum Abkühlen des Abgases und weist beispielsweise Thermalöl als Wärmetauschermedium auf. Das erhitzte Thermalöl aus dem Wärmetauscher 59 kann beispielsweise für die Zuführschnecke 51a verwendet werden.

Die Kühlzone 12 weist vorzugsweise eine Kühlschnecke 64 auf, die vorzugsweise als Trogschnecke ausgebildet ist und eine geschlossene, umlaufende Schneckenwandung 64a aufweist. Zudem weist die Kühlschnecke 64 einen Wärmetauscher auf und somit Mittel zum Abführen der Wärme des gebrannten, insbesondere calcinierten, Materials. Der Wärmetauscher der Kühlschnecke 64 weist vorzugsweise außen um eine Schneckenwandung der Kühlschnecke 64 herum angeordnete Wärmetauscherrohre auf (nicht dargestellt), die mit einem Wärmetauschermedium, vorzugsweise Thermalöl, durchströmt werden. Das erhitzte Thermalöl kann beispielsweise für die Zuführschnecke 51a verwendet werden. Im Gegensatz zu den zuvor beschriebenen Ausführungsformen wird somit in die Kühlzone 12 kein Kühlgas eingeleitet.

Die Kühlschnecke 64 weist in an sich bekannter Weise einen Kühlschneckenantriebsmotor 65 auf.

Wie bereits erläutert, schließt sich an die Kühlzone 12 die Austragsschleuse 13 an. Analog zur Rohmaterialschleuse 9 weist auch die Austragsschleuse 13 zwei Pendelklappen 66a;b zum Öffnen und Schließen der Austragsschleuse 13 auf.

Im Normalschachtofen 7 gemäß der weiteren Ausführungsform läuft nun der Brennvorgang wie folgt ab:
Das zu brennende Rohmaterial wird zunächst abgewogen und chargenweise in die Rohmaterialzuführeinrichtung 51, insbesondere den Schneckenförderer 51a, gegeben, bis diese gefüllt ist. Dann wird der Schneckenförderer 51a in Gang gesetzt und das Rohmaterial in die Rohmaterialschleuse 9 eingefüllt. Die obere Pendelklappe 52a der Rohmaterialschleuse 9 ist dabei geöffnet, die untere Pendelklappe 52b der Rohmaterialschleuse 9 ist geschlossen.

Es handelt sich also bei dem gesamten Brennverfahren, wie üblich, um ein diskontinuierliches Verfahren.

Sobald die Rohmaterialschleuse 9 vollständig befüllt ist, wird die obere Pendelklappe 52a geschlossen und die Rohmaterialschleuse 9 wie oben beschrieben mit Spülgas gespült. Die Rohmaterialschleuse 9 wird wie ebenfalls erläutert solange mit dem Spülgas gespült, bis sie vollständig mit diesem befüllt ist. Dann wird der Spülgasstrom abgestellt und die Rohmaterialschleuse 9 zum Ofeninnenraum 14 geöffnet, indem die untere Pendelklappe 52b der Rohmaterialschleuse 9 geöffnet wird. Dadurch fällt das Rohmaterial in den Ofeninnenraum 14, insbesondere in die Vorwärmzone 10, hinein.

Das Rohmaterial wandert im Gegenstrom, nämlich in Materialtransportrichtung 8, durch den Ofeninnenraum 14 durch und gelangt in die Brennzone 11.

In der Brennzone 11 wird das Rohmaterial durch das Heißgas, welches das Rohmaterial entgegen die Materialtransportrichtung 8 durchströmt wie oben beschrieben derart aufgeheizt, dass es gebrannt, insbesondere entsäuert, wird. Das Material wandert im Gegenstrom, nämlich in Materialtransportrichtung 8, durch die Brennzone 11 durch und gelangt in die Kühlzone 12.

Im Gegensatz zum oben beschriebenen Verfahren wird das Heißgas allerdings nicht in einer Heißgasheizeinrichtung 16 außerhalb des Ofeninnenraums 14 aufgeheizt, sondern es wird innerhalb des Ofeninnenraums 14 aufgeheizt, während des die Brennzone 11 entgegen die Materialtransportrichtung 8 durchströmt. Das Aufheizen des Heißgases erfolgt dabei mittels der Brenngutheizeinrichtung 53.

Denn mittels der Heizmanschetten 54 wird wie oben beschrieben der Ofenmantel 15 aufgeheizt und darüber das an diesem entlang strömende Heißgas. Diese Ausführungsform ist besonders vorteilhaft, da keine Heizelemente im Ofeninnenraum 14 angeordnet sind und den Materialstrom behindern.

Es liegt aber im Rahmen der Erfindung, dass eine Heißgasheizeinrichtung vorhanden ist, falls dies notwendig ist.

Wie oben ebenfalls bereits erläutert, wird das Heißgas bzw. das Ofenabgas zudem mittels der Heißgasumwälzeinrichtung 58 umgewälzt:
Das Ofenabgas wird dazu am oberen Ende der Brennzone 11 aus dem Ofeninneren 14 abgeführt. Ein erster Abgasstrom wird dabei wie oben beschrieben über die Entstaubungseinrichtung 18, den Wärmetauscher 59, die Drossel 60 und die Abgasverdichtungseinrichtung 21 der Abgasspeichereinrichtung 22 zugeführt.

Ein weiterer Abgasstrom des Ofenabgases, das Umwälzheißgas, wird der Heißgasantriebseinrichtung 62, vorzugsweis der Coandadüse 63, zugeführt. Insbesondere beträgt das Verhältnis erster Abgasstrom/Umwälzheißgas 1:5 bis 1:10. Das Umwälzheißgas wird vorzugsweise nicht entstaubt, sondern direkt der Heißgasantriebseinrichtung 62, vorzugsweis der Coandadüse 63, zugeführt. Es wird insbesondere nicht zwischengespeichert im Abgasspeicher 22.

In der Heißgasantriebseinrichtung 62, vorzugsweis der Coandadüse 63, wird das Umwälzheißgas beschleunigt und anschließend unterhalb der Brennzone 11 in den Ofeninnenraum 14 zurückgeführt.

Die Beschleunigung des Umwälzheißgases erfolgt in der Coandadüse 63 dabei in an sich bekannter Weise mittels eines Antriebsgases, welches ebenfalls der Coandadüse 63 zugeführt wird. Bei dem Antriebsgas handelt es sich ebenfalls um Ofenabgas, welches aus der Abgasspeichereinrichtung 22 abgeführt und der Coandadüse zugeführt wird.

Das Antriebsgas und das Umwälzheißgas vermischen sich in an sich bekannter Weise in der Coandadüse und werden dann unterhalb der Brennzone 11 in den Ofeninnenraum 14 zurückgeführt und durchströmen die Brennzone 11 von unten nach oben wie oben beschrieben.

Die Verwendung der Coandadüse 63 ist besonders vorteilhaft, da sie verschleißfrei ist.

Wie oben bereits erläutert, schließt sich an die Brennzone 11 die Kühlzone 12 mit der Kühlschnecke 64 an. Die Kühlschnecke 64 wird vorzugsweise ebenfalls diskontinuierlich betrieben. Das gebrannte Material wird dadurch durch die Kühlschnecke 64 durch transportiert und dabei, insbesondere mittels des Thermalöls, gekühlt.

Nach der Kühlschnecke 64 gelangt das gebrannte Material in die Austragsschleuse 13. Dazu ist die obere Pendelklappe 66a der Austragsschleuse 13 geöffnet und die untere Pendelklappe 66b der Austragsschleuse 13 ist geschlossen. Sobald die Austragsschleuse 13 vollständig befüllt ist, wird die obere Pendelklappe 66a der Austragsschleuse 13 geschlossen und anschließend die untere Pendelklappe 66b der Austragsschleuse 13 geöffnet und das gebrannte Material aus dem Brennofen 2 ausgeschleust.

Nach dem Ausschleusen des gebrannten Materials wird die Austragsschleuse 13 analog zur Rohmaterialschleuse 9 wie ebenfalls oben beschrieben mit Spülgas gespült, bis sie vollständig mit diesem befüllt ist.

Im Rahmen der Erfindung liegt es dabei selbstverständlich auch, Ofenabgas aus dem Brennofen 2 an verschiedenen Stellen zu entnehmen. Beispielsweise kann das Ofenabgas, welches der Abgasspeichereinrichtung 22 zugeführt wird an einer anderen Stelle, beispielsweise weiter oben, entnommen werden als das Ofenabgas für die Heißgasumwälzeinrichtung. Auch kann zum Beispiel eine Umwälzeinrichtung zum Umwälzen des Abgases oberhalb der Brennzone 11 vorhanden sein. Dieses Umwälzgas dient dann zum Vorwärmen des Rohmaterials.

Im Rahmen der Erfindung liegt es dabei auch, die Abgasverwertungseinrichtung 4 für andere industrielle Brennofentypen, z.B. für einen Drehrohrofen oder einen Tunnelofen oder andere Schachtöfen, vorzugsweise einen GGR-Ofen (Gleichstrom-Gegenstrom-Regenerativ-Ofen) oder einen Ringschachtofen, oder einen Schubtischofen zu verwenden.

Die industriellen Brennöfen dienen zum industriellen Brennen/Entsäuern im Gegensatz zu kleinvolumigen Laboröfen, welche zu Versuchszwecken verwendet werden.

Auch kann die Abgasverwertungseinrichtung 4 für die Abgasverwertung von anderen Brennverfahren verwendet werden, bei denen CO₂ als Prozessemmissionsgas entsteht bzw. eine Entsäuerung des carbonatischen Rohmaterials (=Austreiben von CO₂) stattfindet. Vorzugsweise kann die kann die Abgasverwertungseinrichtung 4 Teil einer Vorrichtung zur Herstellung von Zementklinker sein. Denn auch bei der Herstellung von Zement wird carbonatisches Rohmaterial, insbesondere Kalkstein und/oder Mergel, calciniert bzw. entsäuert. Eine derartige Vorrichtung weist hierzu entweder einen vorgeschalteten Brennofen (Calcinierofen) auf oder die Calcinierung bzw. das Entsäuern erfolgt in demselben Brennofen, in dem auch das Sintern zu Zementklinker erfolgt.

Zudem liegt es im Rahmen der Erfindung, dass anstelle oder zusätzlich zur Methanisierungseinrichtung eine andere Umwandlungseinrichtung zur Umwandlung von CO₂ und vorzugsweise Wasserstoff in andere Kohlenwasserstoffe oder Alkohol vorhanden sein kann. Dies kann auch über die Umwandlung von CO₂ in CO erfolgen. Vorzugsweise erfolgt eine Umwandlung in Propan und/oder Butan und/oder Propen und/oder Buten und/oder Methanol (Methanolisierungseinrichtung) und/oder synthetische Kraftstoffe und/oder synthetische Motoröle. Die Umwandlung in synthtesiche Kraftstoffe und/oder Motoröle erfolgt vorzugsweise mittels der Fischer-Tropsch-Synthese.

Die Methanisierungseinrichtung ist aber bevorzugt.

## Patentansprüche

1. Vorrichtung (1), vorzugsweise zur Herstellung von Branntkalk und/oder Magnesia und/oder Dolomit oder Zementklinker, aufweisend
a) einen Brennofen (2) zum Brennen von carbonatischem, schüttfähigem Rohmaterial, bevorzugt von Kalkstein und/oder Magnesit und/oder Dolomit und/oder Mergel,
b) eine Abgasverwertungseinrichtung (4) zur Verwertung des aus dem Brennofen (2) austretenden CO₂-haltigen Ofenabgases, wobei die Abgasverwertungseinrichtung (4) eine Umwandlungseinrichtung zur Umwandlung, vorzugsweise unter Zugabe von Wasserstoff, des im Abgas enthaltenen CO₂ in Kohlenwasserstoff und/oder Alkohol, bevorzugt eine Methanisierungseinrichtung (26) zur Umwandlung des im Abgas enthaltenen CO₂ in Methan und Wasser unter Zugabe von Wasserstoff, aufweist,
**dadurch gekennzeichnet, dass**
der Brennofen (2) Mittel zum Betreiben des Brennofens (2) mit einer CO₂-Atmosphäre und keine Brennstoffheizung zur Verbrennung von Brennstoffen im Ofeninnenraum (14) des Brennofens (2) aufweist, wobei CO₂-Atmosphäre heißt, dass das sich im Ofeninnenraum (14) des Brennofens (2) befindliche Ofenprozessgas einen CO₂-Gehalt von ≥ 80 M.-%, bevorzugt ≥ 90 M.-%, besonders bevorzugt ≥ 98 M.-%, aufweist, und dass der Brennofen (2) eine gasdicht verschließbare Rohmaterialschleuse (9;39) zum chargenweisen Einbringen des Rohmaterials in einen Ofeninnenraum (14) und Mittel zum Spülen der Rohmaterialschleuse (9;39) mit Spülgas aufweist.

2. Vorrichtung (1) nach Anspruch 1,
**dadurch gekennzeichnet, dass**
der Brennofen (2) Mittel zum Betreiben des Brennofens mit Überdruck, vorzugsweise mit einem Überdruck im Ofeninnenraum (14) von 50 bis 1200 mbar, bevorzugt 200 bis 800 mbar, aufweist.

3. Vorrichtung (1) nach Anspruch 1 oder 2,
**dadurch gekennzeichnet, dass**
der Brennofen (2) mindestens eine Brenngutheizeinrichtung (30) zum Aufheizen des Rohmaterials auf die zum Brennen notwendige Temperatur in einer Brennzone (11;37) des Brennofens (2) aufweist, wobei die Brenngutheizeinrichtung (30;43) ausschließlich Mittel zur Erzeugung der für das Aufheizen notwendigen Wärmeenergie ohne Verbrennung von Brennstoffen im Ofeninnenraum (14) aufweist,
wobei vorzugsweise die Brenngutheizeinrichtung (30;43) zumindest eine elektrisch betriebene Heizung, vorzugsweise eine Widerstandsheizung oder eine Mikrowellenheizung oder eine Lichtbogenheizung, und/oder zumindest einen Wärmetauscher aufweist,
wobei vorzugsweise die Widerstandsheizung zumindest ein in einem Ofeninnenraum (14) angeordnetes Heizwiderstandselement (31) aufweist.

4. Vorrichtung (1) nach Anspruch 3,
**dadurch gekennzeichnet, dass**
der Wärmetauscher im Ofeninnenraum (14) angeordnet ist.

5. Vorrichtung (1) nach Anspruch 3,
**dadurch gekennzeichnet, dass**
die Brenngutheizeinrichtung (53) zumindest eine Widerstandheizung in Form einer Heizmanschette (54) zum Beheizen des Ofenmantels (15) aufweist, wobei die Heizmanschette (54) außen um den Ofenmantel (15) herum angeordnet ist, wobei die Brenngutheizeinrichtung (53) vorzugsweise mehrere Heizmanschetten (54) aufweist,
wobei vorzugsweise die Heizmanschetten (54) eine innere Heizschale (55), eine außen um die Heizschale (55) herum angeordnete Dämmschale (56) und vorzugsweise eine außen um die Dämmschale (56) herum angeordnete Manschettenaußenschale (57) aufweist, wobei vorzugsweise die Heizschale (55) zumindest ein elektrisches Heizwiderstandselement, vorzugsweise zumindest eine Heizwendel, bevorzugt mehrere Heizwendeln, aufweist.

6. Vorrichtung (1) nach einem der vorhergehenden Ansprüche,
**dadurch gekennzeichnet, dass**
die Lichtbogenheizung eine Anode und eine Kathode aufweist, welche im Ofeninnenraum (14) angeordnet sind.

7. Vorrichtung (1) nach einem der vorhergehenden Ansprüche,
**dadurch gekennzeichnet, dass**
die Vorrichtung (1) eine Heißgaszuführeinrichtung (5) zum Zuführen von Heißgas in oder unterhalb einer Brennzone (11;37) des Brennofens (2) an einer oder mehreren Heißgaseinlassstellen (34) aufweist, wobei die Heißgaszuführeinrichtung (5) zumindest eine Heißgasheizeinrichtung (16) zum Aufheizen des Gases und/oder vorzugsweise zumindest eine Heißgasverdichtungseinrichtung (23) aufweist,
wobei vorzugsweise die Heißgasheizeinrichtung (16) zumindest eine elektrisch betriebene Heizung, vorzugsweise eine Widerstandsheizung, und/oder zumindest einen Wärmetauscher zum Aufheizen des Gases aufweist.

8. Vorrichtung (1) nach einem der vorhergehenden Ansprüche,
**dadurch gekennzeichnet, dass**
die Vorrichtung (1) eine Ofenabgasumwälzeinrichtung (58) zum Abführen zumindest eines Teils des Ofenabgases als Umwälzgas am oberen Ende der Brennzone (11) und zum Rückführen des Umwälzgases am unteren Ende der Brennzone (11) aufweist,
wobei vorzugsweise die Ofenabgasumwälzeinrichtung (58) mindestens eine Ofenabgasantriebseinrichtung (62), vorzugsweise eine Coandadüse (63) oder ein Hochtemperaturgebläse, zur Beschleunigung des Umwälzgases aufweist.

9. Vorrichtung (1) nach Anspruch 8,
**dadurch gekennzeichnet, dass**
das Umwälzgas aus dem Ofeninnenraum (14) ohne Zwischenspeicherung, insbesondere direkt, der Ofenabgasumwälzeinrichtung (58) zugeführt wird.

10. Vorrichtung (1) nach einem der vorhergehenden Ansprüche,
**dadurch gekennzeichnet, dass**
a) die Vorrichtung (1) eine Kühlgaszuführeinrichtung (6) zum Zuführen von Kühlgas in eine Kühlzone (12) des Brennofens (2) aufweist,
oder
b) die Kühlzone (12) eine Kühlschnecke (64) aufweist, die als Wärmetaucher ausgebildet ist und Mittel zum Abführen der Wärme des gebrannten, insbesondere calcinierten, Materials aufweist, wobei die Vorrichtung (1) vorzugsweise keine Kühlgaszuführeinrichtung (6) zum Zuführen von Kühlgas in die Kühlzone (12) des Brennofens (2) aufweist.

11. Vorrichtung (1) nach einem der vorhergehenden Ansprüche,
**dadurch gekennzeichnet, dass**
es sich bei dem Brennofen (2) um einen Schachtofen, vorzugsweise einen vertikalen Normalschachtofen (7) oder einen Schrägschachtofen (33) oder einen Schwebeschachtofen (35) oder einen Gleichstrom-Gegenstrom-Regenerativ-Ofen oder einen Ringschachtofen, oder einen Drehrohrofen oder einen Schubtischofen handelt.

12. Vorrichtung (1) nach einem der vorhergehenden Ansprüche,
**dadurch gekennzeichnet, dass**
der Brennofen (2) eine gasdicht verschließbare Austragsschleuse (13) zum chargenweisen Austragen des gebrannten Materials aus dem Ofeninnenraum (14) und Mittel zum Spülen der Austragsschleuse (13) mit Spülgas aufweist,
wobei vorzugsweise der Brennofen (2) zum Brennen von stückigem Rohmaterial, insbesondere von Rohmaterial mit Körnern mit einer Korngröße von > 5 mm, dient und in eine Materialtransportrichtung (8) gesehen einander nachgeordnet die Rohmaterialschleuse (9), vorzugsweise eine Vorwärmzone (10), eine Brennzone (11), eine Kühlzone (12) und die Austragsschleuse (13) aufweist.

13. Vorrichtung (1) nach Anspruch 11,
**dadurch gekennzeichnet, dass**
der Brennofen (2) ein im Gleichstromprinzip betreibbarer Schwebeschachtofen (35) für das Brennen von mehlförmigem, im Ofenprozessgas dispergierten, Rohmaterial ist,
wobei der Schwebeschachtofen (35) vorzugsweise von unten nach oben gesehen eine Heißgasverteileinrichtung (36), eine Brennzone (37) und eine Rekuperationszone (38) sowie eine oberhalb der Heißgasverteileinrichtung (36) und unterhalb der Brennzone (37) angeordnete Rohmaterialeinlassstelle (49) aufweist,
wobei die Brennzone (37) vorzugsweise einen oder mehrere in eine Materialtransportrichtung (8) hintereinander angeordnete Brennzonenbereiche (42) aufweist, wobei die Brennzonenbereiche (42) jeweils eine Brenngutheizeinrichtung (43) aufweisen, wobei die Brenngutheizeinrichtung (43) vorzugsweise zumindest eine elektrisch betriebene Heizung, bevorzugt eine Lichtbogen-Heizung oder eine Mikrowellen-Heizung oder eine Widerstandsheizung oder eine Mikrowellenheizung, und/oder zumindest einen Wärmetauscher aufweist.

14. Vorrichtung (1) nach einem der vorhergehenden Ansprüche,
**dadurch gekennzeichnet, dass**
die Abgasverwertungseinrichtung (4)
a) eine Methanpyrolyseeinrichtung (27) zur Umwandlung des in der Methanisierungseinrichtung (26) erzeugten Methans in Wasserstoff und festen Kohlenstoff,
und
b) Mittel zur Förderung des in der Methanpyrolyseeinrichtung (27) erzeugten Wasserstoffs in die Methanisierungseinrichtung (26),
aufweist.

15. Vorrichtung (1) nach einem der vorhergehenden Ansprüche,
**dadurch gekennzeichnet, dass**
a) die Methanisierungseinrichtung (26) Mittel zur Methanogenese, vorzugsweise zumindest einen Bioreaktor mit Archaeen als Methanbildner aufweist, wobei der Bioreaktor vorzugsweise mit einem Überdruck von 1 bis 100 bar, bevorzugt mit 10 bis 35 bar, besonders bevorzugt 10 bis 20 bar, betreibbar ist,
und/oder
b) die Methanisierungseinrichtung (26) Mittel zur chemischen Methanisierung, bevorzugt zumindest einen Membranreaktor, aufweist.

16. Vorrichtung (1) nach Anspruch 14 oder 15,
**dadurch gekennzeichnet, dass**
a) die Methanpyrolyseeinrichtung (27) zumindest einen mit geschmolzenem Metall, vorzugsweise mit geschmolzenem Zinn, gefüllten Flüssigmetall-Blasensäulenreaktor und/oder Mittel zur Durchführung der Methanpyrolyse mittels des Kvaerner-Verfahrens aufweist, und/oder
b) die Abgasverwertungseinrichtung (4) Mittel zum zusätzlichen Zuführen von Erdgas zur Methanpyrolyseeinrichtung (27), vorzugsweise aus einer Pipeline oder einem Erdgasspeicher, aufweist.

17. Vorrichtung (1) nach einem der vorhergehenden Ansprüche,
**dadurch gekennzeichnet, dass**
a) die Abgasverwertungseinrichtung (4) eine Abgasreinigungseinrichtung (29) zur Reinigung des Ofenabgases von anderen Bestandteilen als CO₂ vor der Methanisierung in der Methanisierungseinrichtung (26) aufweist,
und/oder
b) die Abgasverwertungseinrichtung (4) eine Elektrolyseeinrichtung (28) zur zusätzlichen Bereitstellung von Wasserstoff für die Methanisierungseinrichtung (26) aufweist,
und/oder
c) die Abgasverwertungseinrichtung (4) vor der Methanisierungseinrichtung (26) einen Hochdruckverdichter (46), einen Hochdruckspeicher (47) und einen Druckminderer (48) aufweist.

18. Verfahren zum Entsäuern von carbonatischem, schüttfähigem Rohmaterial, bevorzugt von Kalkstein und/oder Magnesit und/oder Dolomit und/oder Mergel, wobei das Rohmaterial in einem Brennofen (2), entsäuert wird und im Ofenabgas des Brennofens (2) enthaltenes CO₂ in Kohlenwasserstoff und/oder Alkohol, bevorzugt durch Methanisierung in Methan und Wasser, umgewandelt wird,
**dadurch gekennzeichnet, dass**
der Brennofen (2) mit einer CO₂-Atmosphäre betrieben wird, wobei das sich in einem Ofeninnenraum (14) des Brennofens (2) befindliche Ofenprozessgas einen CO₂-Gehalt von bevorzugt ≥ 80 M.-%, besonders bevorzugt ≥ 90 M.-%, ganz besonders bevorzugt ≥ 98 M.-%, aufweist, und keine Verbrennung von Brennstoffen im Ofeninnenraum (14) des Brennofens (2) zur Erzeugung der für das Entsäuern des Rohmaterials notwendigen Wärmeenergie stattfindet, und
der Brennofen (2) eine gasdicht verschließbare Rohmaterialschleuse (9;39) zum chargenweisen Einbringen des Rohmaterials in einen Ofeninnenraum (14) und Mittel zum Spülen der Rohmaterialschleuse (9;39) mit Spülgas aufweist.

19. Verfahren nach Anspruch 18,
**dadurch gekennzeichnet, dass**
a) zur Erzeugung der für das Entsäuern des Rohmaterials notwendigen Wärmeenergie zumindest teilweise, vorzugsweise ausschließlich, elektrische Energie, vorzugsweise aus grünem Strom, verwendet wird,
und/oder
b) alle in den Brennofen (2) eingeleiteten Ofenprozessgase zu bevorzugt ≥ 80 M.-%, besonders bevorzugt ≥ 90 M.-%, ganz besonders bevorzugt ≥ 98 M.-% aus CO₂ bestehen und/oder keinen Sauerstoff aufweisen.

20. Verfahren nach Anspruch 18 oder 19,
**dadurch gekennzeichnet, dass**
a) in oder unterhalb einer Brennzone (11;37) des Brennofens (2) Heißgas mit einer Temperatur eingeleitet wird, die zum Entsäuern des Rohmaterials ausreichend ist, vorzugsweise mit einer Temperatur von 800 bis 1250°C, bevorzugt 900 bis 1100 °C,
und/oder
b) das Rohmaterial in einer Brennzone (11;37) des Brennofens (2) mittels einer Brenngutheizeinrichtung (30;43) aufgeheizt wird, wobei die Brenngutheizeinrichtung (30;43) mindestens eine elektrisch betriebene Heizung, vorzugsweise eine Widerstandsheizung oder eine Mikrowellenheizung oder eine Lichtbogenheizung, und/oder zumindest einen Wärmetauscher aufweist.

21. Verfahren nach einem der Ansprüche 18 bis 20,
**dadurch gekennzeichnet, dass**
a) das Verfahren ein Verfahren zur Herstellung von Branntkalk, Magnesia oder Doloma ist,
oder
b) das Verfahren Teil eines Herstellungsverfahrens zur Herstellung von Zementklinker ist.

22. Verfahren nach einem der Ansprüche 18 bis 21,
**dadurch gekennzeichnet, dass**
a) das durch die Methanisierung erzeugte Methan durch Methanpyrolyse in Wasserstoff und festen Kohlenstoff umgewandelt wird und der bei der Methanpyrolyse erzeugte Wasserstoffs für die Methanisierung verwendet wird,
und/oder
b) die Methanisierung zumindest eines Teils des Ofenabgases, vorzugsweise des gesamten Ofenabgases, durch Methanogenese erfolgt.

23. Verfahren nach einem der Ansprüche 18 bis 22,
**dadurch gekennzeichnet, dass**
das Ofenabgas einen CO₂-Gehalt von ≥ 80 M.-%, bevorzugt ≥ 90 M.-%, besonders bevorzugt ≥ 98 M.-%, aufweist.

24. Verfahren nach einem der Ansprüche 18 bis 23,
**dadurch gekennzeichnet, dass**
a) das Ofenabgas vor der Methanisierung von anderen Bestandteilen als CO₂ gereinigt wird,
und/oder
b) für die Methanisierung zusätzlich durch Elektrolyse erzeugter Wasserstoff verwendet wird.

25. Verfahren nach einem der Ansprüche 22 bis 24,
**dadurch gekennzeichnet, dass**
für die Methanpyrolyse zusätzlich zugeführtes Erdgas verwendet wird.

26. Verfahren nach einem der Ansprüche 18 bis 25,
**dadurch gekennzeichnet, dass**
zur Durchführung des Verfahrens eine Vorrichtung (1) gemäß einem der Ansprüche 1 bis 17 verwendet wird.

## Claims

1. Apparatus (1), preferably for the production of quicklime and/or magnesia and/or dolomite or cement clinker, comprising
a) a kiln (2) for firing carbonaceous, pourable raw material, preferably limestone and/or magnesite and/or dolomite and/or marl,
b) an exhaust gas reutilization device (4) for reutilizing the CO₂-containing kiln exhaust gas emerging from the kiln (2), the exhaust gas reutilization device (4) having a conversion device for converting, preferably with the addition of hydrogen, the CO₂ contained in the exhaust gas into hydrocarbon and/or alcohol, preferably a methanation device (26) for converting the CO₂ contained in the exhaust gas into methane and water with the addition of hydrogen,
**characterized in that**
the kiln (2) comprises means for operating the kiln (2) with a CO₂ atmosphere and no fuel heater for burning fuels in the kiln interior (14) of the kiln (2), wherein CO₂ atmosphere means that the kiln process gas present in the kiln interior (14) of the kiln (2) has a CO₂ content of ≥ 80 ma.- %, preferably ≥ 90 ma.-%, particularly preferably ≥ 98 ma.-%,
and **in that** the kiln (2) has a raw material sluice (9;39), which can be closed in a gas-tight manner, for introducing the raw material in batches into a kiln interior (14) and means for flushing the raw material sluice (9;39) with flushing gas.

2. Apparatus (1) according to claim 1,
**characterized in that**
the kiln (2) has means for operating the kiln with overpressure, preferably with an overpressure in the kiln interior (14) of 50 to 1200 mbar, preferably 200 to 800 mbar.

3. Apparatus (1) according to claim 1 or 2,
**characterized in that**
the kiln (2) has at least one kiln charge heating device (30) for heating the raw material to the temperature required for firing in a firing zone (11;37) of the kiln (2), the kiln charge heating device (30;43) comprising exclusively means for generating the thermal energy required for heating without combustion of fuels in the kiln interior (14),
wherein preferably the kiln charge heating device (30;43) comprises at least one electrically operated heater, preferably a resistance heater or a microwave heater or an arc heater, and/or at least one heat exchanger, wherein preferably the resistance heater has at least one heating resistance element (31) arranged in an kiln interior (14).

4. Apparatus (1) according to claim 3,
**characterized in that**
the heat exchanger is arranged in the kiln interior (14).

5. Apparatus (1) according to claim 3,
**characterized in that**
the kiln charge heating device (53) has at least one resistance heater in the form of a heating sleeve (54) for heating the kiln shell (15), the heating sleeve (54) being arranged on the outside around the kiln shell (15), the kiln charge heating device (53) preferably comprising a plurality of heating sleeves (54),
wherein preferably the heating sleeves (54) comprises an inner heating shell (55), an insulating shell (56) arranged around the outside of the heating shell (55) and preferably an outer sleeve shell (57) arranged around the outside of the insulating shell (56),
wherein preferably the heating shell (55) comprises at least one electrical heating resistor element, preferably at least one heating coil, preferably several heating coils.

6. Apparatus (1) according to one of the preceding claims,
**characterized in that**
the arc heater has an anode and a cathode, which are arranged in the kiln interior (14).

7. Apparatus (1) according to one of the preceding claims,
**characterized in that**
the apparatus (1) has a hot gas supply device (5) for supplying hot gas in or below a firing zone (11;37) of the kiln (2) at one or more hot gas inlet points (34), the hot gas supply device (5) comprising at least one hot gas heating device (16) for heating the gas and/or preferably at least one hot gas compression device (23),
wherein preferably the hot gas heating device (16) comprising at least one electrically operated heater, preferably a resistance heater, and/or at least one heat exchanger for heating the gas.

8. Apparatus (1) according to one of the preceding claims,
**characterized in that**
the apparatus (1) has a kiln exhaust gas recirculation device (58) for discharging at least part of the kiln exhaust gas as recirculation gas at the upper end of the firing zone (11) and for recirculating the recirculation gas at the lower end of the firing zone (11),
wherein preferably the kiln exhaust gas recirculation device (58) has at least one kiln exhaust gas drive device (62), preferably a Coanda nozzle (63) or a high-temperature blower, for accelerating the recirculation gas.

9. Apparatus (1) according to claim 8,
**characterized in that**
the recirculating gas is supplied from the kiln interior (14) to the kiln exhaust gas recirculation device (58) without intermediate storage, in particular directly.

10. Apparatus (1) according to one of the preceding claims, **characterized in that**
a) the apparatus (1) comprises a cooling gas supply device (6) for supplying cooling gas to a cooling zone (12) of the kiln (2),
or
b) the cooling zone (12) comprises a cooling screw (64) which is designed as a heat exchanger and comprises means for dissipating the heat of the fired, in particular calcined, material, wherein the apparatus (1) preferably comprises no cooling gas supply device (6) for supplying cooling gas into the cooling zone (12) of the kiln (2).

11. Apparatus (1) according to one of the preceding claims,
**characterized in that**
the kiln (2) is a shaft kiln, preferably a vertical normal shaft kiln (7) or an inclined shaft kiln (33) or a levitation shaft kiln (35) or a DC counter-current regenerative kiln or an annular shaft kiln, or a rotary kiln or a push table kiln.

12. Apparatus (1) according to one of the preceding claims,
**characterized in that**
the kiln (2) comprises a discharge sluice (13), which can be closed in a gas-tight manner, for discharging the fired material from the kiln interior (14) in batches and means for flushing the discharge sluice (13) with flushing gas,
wherein preferably the kiln (2) serves for firing lumpy raw material, in particular raw material with grains with a grain size of > 5 mm, and comprises the raw material sluice (9), preferably a preheating zone (10), a firing zone (11), a cooling zone (12) and the discharge sluice (13), arranged downstream of one another as viewed in a material transport direction (8).

13. Apparatus (1) according to claim 11,
**characterized in that**
the kiln (2) is a levitation shaft kiln (35) which can be operated according to the direct current principle for firing mealy raw material dispersed in the kiln process gas,
wherein, when viewed from below upwards, the levitation shaft kiln (35) preferably comprises a hot gas distribution device (36), a firing zone (37) and a recuperation zone (38) as well as a raw material inlet point (49) arranged above the hot gas distribution device (36) and below the firing zone (37),
wherein the firing zone (37) preferably comprises one or more firing zone regions (42) arranged one behind the other in a material transport direction (8), wherein the firing zone regions (42) each have a kiln charge heating device (43), wherein the kiln charge heating device (43) preferably has at least one electrically operated heater, preferably an arc heater or a microwave heater or a resistance heater or a microwave heater, and/or at least one heat exchanger.

14. Apparatus (1) according to one of the preceding claims,
**characterized in that**
the exhaust gas reutilization device (4) comprises
a) a methane pyrolysis device (27) for converting the methane produced in the methanation device (26) into hydrogen and solid carbon,
and
b) means for conveying the hydrogen produced in the methane pyrolysis device (27) into the methanation device (26).

15. Apparatus (1) according to one of the preceding claims,
**characterized in that**
a) the methanation device (26) comprises means for methanogenesis, preferably at least one bioreactor with archaea as methane formers, the bioreactor preferably being operable at an overpressure of 1 to 100 bar, preferably 10 to 35 bar, particularly preferably 10 to 20 bar,
and/or
b) the methanation device (26) comprises means for chemical methanation, preferably at least one membrane reactor.

16. Apparatus (1) according to claim 14 or 15,
**characterized in that**
a) the methane pyrolysis device (27) comprises at least one liquid metal bubble column reactor filled with molten metal, preferably molten tin, and/or means for carrying out the methane pyrolysis by means of the Kværner process,
and/or
b) the exhaust gas reutilization device (4) comprises means for additionally supplying natural gas to the methane pyrolysis device (27), preferably from a pipeline or a natural gas storage facility.

17. Apparatus (1) according to one of the preceding claims, **characterized in that**
a) the exhaust gas reutilization device (4) comprises an exhaust gas purification device (29) for purifying the kiln exhaust gas of components other than CO₂ prior to the methanation in the methanation device (26),
and/or
b) the exhaust gas reutilization device (4) comprises an electrolysis device (28) for the additional provision of hydrogen for the methanation device (26),
and/or
c) the exhaust gas reutilization device (4) comprises a high-pressure compressor (46), a high-pressure storage (47) and a pressure reducer (48) upstream of the methanation device (26).

18. Process for deacidifying carbonaceous, pourable raw material, preferably limestone and/or magnesite and/or dolomite and/or marl, wherein the raw material is deacidified in a kiln (2), and CO₂ contained in the kiln exhaust gas of the kiln (2) is converted into hydrocarbon and/or alcohol, preferably by methanation into methane and water,
**characterized in that**
the kiln (2) is operated with a CO₂ atmosphere, wherein the kiln process gas located in a kiln interior (14) of the kiln (2) has a CO₂ content of preferably ≥ 80 ma.-%, particularly preferably ≥ 90 ma.-%, very particularly preferably ≥ 98 ma.-%,
and no combustion of fuels takes place in the kiln interior (14) of the kiln (2) to generate the thermal energy required for deacidifying the raw material, and
the kiln (2) comprises a raw material sluice (9;39) which can be closed in a gas-tight manner for introducing the raw material in batches into a kiln interior (14) and means for flushing the raw material sluice (9;39) with flushing gas.

19. Method according to claim 18,
**characterized in that**
a) electrical energy, preferably from green electricity, is used at least partially, preferably exclusively, to generate the thermal energy required for deacidifying the raw material,
and/or
b) all kiln process gases fed into the kiln (2) preferably consist of ≥ 80 ma.-%, particularly preferably ≥ 90 ma.-%, very particularly preferably ≥ 98 ma.-% of CO₂ and/or contain no oxygen.

20. Method according to claim 18 or 19,
**characterized in that**
a) hot gas is introduced into or below a firing zone (11;37) of the kiln (2) at a temperature which is sufficient for deacidifying the raw material, preferably at a temperature of 800 to 1250°C, preferably 900 to 1100°C,
and/or
b) the raw material is heated in a firing zone (11;37) of the kiln (2) by means of a kiln charge heating device (30;43), the kiln charge heating device (30;43) having at least one electrically operated heater, preferably a resistance heater or a microwave heater or an arc heater, and/or at least one heat exchanger.

21. Method according to one of claims 18 to 20,
**characterized in that**
a) the process is a process for the production of quicklime, magnesia or doloma,
or
b) the process is part of a manufacturing process for the production of cement clinker.

22. Method according to one of claims 18 to 21,
**characterized in that**
a) the methane produced by methanation is converted into hydrogen and solid carbon by methane pyrolysis and the hydrogen produced during methane pyrolysis is used for the methanation,
and/or
b) the methanation of at least part of the kiln exhaust gas, preferably the entire kiln exhaust gas, takes place by methanogenesis.

23. Method according to one of claims 18 to 22,
**characterized in that**
the kiln exhaust gas has a CO₂ content of ≥ 80 ma.-%, preferably ≥ 90 ma.-%, particularly preferably ≥ 98 ma.-%.

24. Method according to one of claims 18 to 23,
**characterized in that**
a) the kiln exhaust gas is purified of components other than CO₂ before the methanation,
and/or
b) hydrogen produced by electrolysis is additionally used for the methanation.

25. Method according to one of claims 22 to 24,
**characterized in that**
additionally supplied natural gas is used for the methane pyrolysis.

26. Method according to one of claims 18 to 25,
**characterized in that**
for carrying out the method, an apparatus (1) according to any one of claims 1 to 17 is used.

## Revendications

1. Dispositif (1), de préférence pour la production de chaux vive et/ou de magnésie et/ou de dolomite ou de clinker de ciment, comprenant
a) un four de cuisson (2) pour la cuisson de matière première carbonatique, versable, de préférence de calcaire et/ou de magnésite et/ou de dolomite et/ou de marne,
b) un dispositif d'utilisation de gaz d'échappement (4) pour l'utilisation du gaz d'échappement du four contenant du CO₂ sortant du four de cuisson (2), le dispositif d'utilisation de gaz d'échappement (4) comprenant un dispositif de conversion pour la conversion, de préférence avec addition d'hydrogène, du CO₂ contenu dans le gaz d'échappement en hydrocarbure et/ou alcool, de préférence un dispositif de méthanisation (26) pour la conversion du CO₂ contenu dans le gaz d'échappement en méthane et eau avec addition d'hydrogène,
**caractérisé en ce que**
le four de cuisson (2) comprend des moyens pour opérer le four de cuisson (2) avec une atmosphère de CO₂ et aucun chauffage de combustible pour la combustion de combustibles dans l'espace intérieur (14) de four du four de cuisson (2), l'atmosphère de CO₂ signifiant que le gaz de processus de four se trouvant dans l'espace intérieur (14) de four du four de cuisson (2) comprend une teneur en CO₂ de ≥ 80 % en masse, de préférence ≥ 90 % en masse, de manière particulièrement préférée ≥ 98 % en masse,
et **en ce que** le four de cuisson (2) comprend une écluse de matière première (9;39) pouvant être fermé de manière étanche au gaz pour l'introduction par charges de la matière première dans un espace intérieur de four (14) et des moyens pour rincer l'écluse de matière première (9;39) avec du gaz de rinçage.

2. Dispositif (1) selon la revendication 1,
**caractérisé en ce que**
le four de cuisson (2) comprend des moyens pour opérer le four de cuisson en surpression, de préférence avec une surpression dans l'espace intérieur de four (14) de 50 à 1200 mbar, de préférence de 200 à 800 mbar.

3. Dispositif (1) selon la revendication 1 ou 2,
**caractérisé en ce que**
le four de cuisson (2) comprend au moins un dispositif de chauffage de la matière à cuire (30) pour chauffer la matière première à la température nécessaire à la cuisson dans une zone de cuisson (11;37) du four de cuisson (2), le dispositif de chauffage de la matière à cuire (30;43) comprenant exclusivement des moyens pour produire l'énergie thermique nécessaire au chauffage sans combustion de combustibles dans l'espace intérieur de four (14),
de préférence le dispositif de chauffage de la matière à cuire (30;43) comprenant au moins un chauffage à commande électrique, de préférence un chauffage par résistance ou un chauffage par micro-ondes ou un chauffage par arc électrique, et/ou au moins un échangeur de chaleur,
dans lequel, de préférence, le chauffage par résistance comprend au moins un élément de résistance de chauffage (31) disposé dans un espace intérieur de four (14).

4. Dispositif (1) selon la revendication 3,
**caractérisé en ce que**
l'échangeur de chaleur est disposé à l'intérieur de four (14).

5. Dispositif (1) selon la revendication 3,
**caractérisé en ce que**
le dispositif de chauffage de la matière à cuire (53) comprend au moins un chauffage par résistance sous la forme d'une manchette de chauffage (54) pour chauffer l'enveloppe de four (15), la manchette de chauffage (54) étant disposée à l'extérieur autour de l'enveloppe de four (15), le dispositif de chauffage de la matière à cuire (53) comprenant de préférence plusieurs manchettes de chauffage (54),
dans lequel, de préférence, les manchettes de chauffage (54) comprennent une coque de chauffage intérieure (55), une coque isolante (56) disposée à l'extérieur autour de la coque de chauffage (55) et, de préférence, une coque extérieure de manchette (57) disposée à l'extérieur autour de la coque isolante (56),
de préférence la coque de chauffage (55) comprenant au moins un élément de résistance électrique chauffant, de préférence au moins une hélice chauffante, de préférence plusieurs hélices chauffantes.

6. Dispositif (1) selon l'une des revendications précédentes,
**caractérisé en ce que**
le chauffage à l'arc électrique comprend une anode et une cathode qui sont disposées dans l'espace intérieur de four (14).

7. Dispositif (1) selon l'une des revendications précédentes,
**caractérisé en ce que**
le dispositif (1) comprend un dispositif d'alimentation de gaz chaud (5) pour alimenter du gaz chaud dans ou sous une zone de cuisson (11;37) du four de cuisson (2) à un ou plusieurs points d'entrée de gaz chaud (34), le dispositif d'alimentation de gaz chaud (5) comprenant au moins un dispositif de chauffage de gaz chaud (16) pour chauffer le gaz et/ou de préférence au moins un dispositif de compression de gaz chaud (23), dans lequel, de préférence, le dispositif de chauffage de gaz chaud (16) comprend au moins un chauffage à commande électrique, de préférence un chauffage par résistance, et/ou au moins un échangeur de chaleur pour chauffer le gaz.

8. Dispositif (1) selon l'une des revendications précédentes,
**caractérisé en ce que**
le dispositif (1) comprend un dispositif de circulation de gaz d'échappement du four (58) pour évacuer au moins une partie du gaz d'échappement du four en tant que gaz de circulation à l'extrémité supérieure de la zone de cuisson (11) et pour reconduire le gaz de circulation à l'extrémité inférieure de la zone de cuisson (11),
dans lequel, de préférence, le dispositif de circulation de gaz d'échappement du four (58) comprend au moins un dispositif d'entraînement de gaz d'échappement du four (62), de préférence une buse Coand (63) ou un souffleur à haute température, pour accélérer le gaz de circulation.

9. Dispositif (1) selon la revendication 8,
**caractérisé en ce que**
le gaz de circulation est alimenté depuis l'espace intérieur de four (14) au dispositif de circulation de gaz d'échappement du four (58) sans stockage intermédiaire, en particulier directement.

10. Dispositif (1) selon l'une des revendications précédentes,
**caractérisé en ce que**
a) le dispositif (1) comprend un dispositif d'alimentation de gaz de refroidissement (6) pour l'alimentation du gaz de refroidissement dans une zone de refroidissement (12) du four de cuisson (2),
ou
b) la zone de refroidissement (12) comprend une vis sans fin de refroidissement (64) qui est conçue comme un échangeur de chaleur et qui comprend des moyens pour évacuer la chaleur de la matière cuite, en particulier calcinée, le dispositif (1) ne comprenant de préférence pas de dispositif d'alimentation de gaz de refroidissement (6) pour alimenter du gaz de refroidissement dans la zone de refroidissement (12) du four de cuisson (2).

11. Dispositif (1) selon l'une des revendications précédentes,
**caractérisé en ce que**
le four de cuisson (2) est un four à cuve, de préférence un four à cuve normale vertical (7) ou un four à cuve inclinée (33) ou un four à cuve flottante (35) ou un four régénérateur à courant continu et à contre-courant ou un four à cuve annulaire, ou un four rotatif ou un four à table mobile.

12. Dispositif (1) selon l'une des revendications précédentes,
**caractérisé en ce que**
le four de cuisson (2) comprend une écluse d'évacuation (13) pouvant être fermé de manière étanche aux gaz pour évacuer par charges la matière cuite de l'espace intérieur de four (14) et des moyens pour rincer l'écluse d'évacuation (13) avec du gaz de rinçage,
de préférence le four de cuisson (2) servant à la cuisson de matière première en morceaux, en particulier de matière première avec des grains d'une taille de grain > 5 mm, et comprenant, en aval les uns des autres dans une direction de transport de matière (8), l'écluse de matière première (9), de préférence une zone de préchauffage (10), une zone de cuisson (11), une zone de refroidissement (12) et l'écluse d'évacuation (13).

13. Dispositif (1) selon la revendication 11,
**caractérisé en ce que**
le four de cuisson (2) est un four à cuve flottante (35) pouvant être opéré selon le principe du courant continu pour la cuisson de matière première sous forme de farine dispersée dans le gaz de processus du four, dans lequel le four à cuve flottante (35) comprend de préférence, vu de bas en haut, un dispositif de distribution de gaz chaud (36), une zone de cuisson (37) et une zone de récupération (38), ainsi qu'un point d'entrée de matière première (49) disposé au-dessus du dispositif de distribution de gaz chaud (36) et au-dessous de la zone de cuisson (37),
la zone de cuisson (37) comprenant de préférence une ou plusieurs régions de zone de cuisson (42) disposées les unes derrière les autres dans une direction de transport de matière (8), les régions de zone de cuisson (42) comprenant chacune un dispositif de chauffage de la matière à cuire (43), le dispositif de chauffage de la matière à cuire (43) comprenant de préférence au moins un chauffage à commande électrique, de préférence un chauffage à arc électrique ou un chauffage à micro-ondes ou un chauffage à résistance ou un chauffage à micro-ondes, et/ou au moins un échangeur de chaleur.

14. Dispositif (1) selon l'une des revendications précédentes,
**caractérisé en ce que**
le dispositif d'utilisation de gaz d'échappement (4) comprend
a) un dispositif de pyrolyse du méthane (27) pour convertir le méthane produit dans le dispositif de méthanisation (26) en hydrogène et en carbone solide,
et
b) des moyens pour transporter l'hydrogène produit dans le dispositif de pyrolyse du méthane (27) dans le dispositif de méthanisation (26).

15. Dispositif (1) selon l'une des revendications précédentes,
**caractérisé en ce que**
a) le dispositif de méthanisation (26) comprend des moyens pour la méthanogénèse, de préférence au moins un bioréacteur avec des archées en tant qu'agent de formation de méthane, le bioréacteur pouvant de préférence être opéré avec une surpression de 1 à 100 bars, de préférence de 10 à 35 bars, de manière particulièrement préférée de 10 à 20 bars,
et/ou
b) le dispositif de méthanisation (26) comprend des moyens de méthanisation chimique, de préférence au moins un réacteur à membrane.

16. Dispositif (1) selon la revendication 14 ou 15,
**caractérisé en ce que**
a) le dispositif de pyrolyse du méthane (27) comprend au moins un réacteur à colonne à bulles de métal liquide rempli de métal fondu, de préférence d'étain fondu, et/ou des moyens pour réaliser la pyrolyse du méthane par le procédé Kvaerner,
et/ou
b) le dispositif d'utilisation de gaz d'échappement (4) comprend des moyens pour l'alimentation supplémentaire de gaz naturel au dispositif de pyrolyse du méthane (27), de préférence à partir d'un pipeline ou d'un réservoir de gaz naturel.

17. Dispositif (1) selon l'une des revendications précédentes,
**caractérisé en ce que**
a) le dispositif d'utilisation de gaz d'échappement (4) comprend un dispositif de purification de gaz d'échappement (29) pour purifier le gaz d'échappement du four des composants autres que le CO₂ avant la méthanisation dans le dispositif de méthanisation (26),
et/ou
b) le dispositif d'utilisation de gaz d'échappement (4) comprend un dispositif d'électrolyse (28) pour la mise à disposition supplémentaire d'hydrogène pour le dispositif de méthanisation (26),
et/ou
c) le dispositif d'utilisation de gaz d'échappement (4) comprend avant le dispositif de méthanisation (26) un compresseur haute pression (46), un accumulateur haute pression (47) et un réducteur de pression (48).

18. Procédé de désacidification d'une matière première carbonatique versable, de préférence du calcaire et/ou de la magnésite et/ou de la dolomite et/ou de la marne, la matière première étant désacidifiée dans un four de cuisson (2), et le CO₂ contenu dans le gaz d'échappement du four du four de cuisson (2) étant transformé en hydrocarbure et/ou en alcool, de préférence par méthanisation en méthane et en eau,
**caractérisé en ce que**
le four de cuisson (2) est opéré avec une atmosphère de CO₂, le gaz de processus de four se trouvant dans un espace intérieur de four (14) du four de cuisson (2) comprenant une teneur en CO₂ de préférence ≥ 80 % en masse, de manière particulièrement préférée ≥ 90 % en masse, de manière tout particulièrement préférée ≥ 98 % en masse,
et qu'aucune combustion de combustibles n'a lieu dans l'espace intérieur (14) de four du four de cuisson (2) pour produire l'énergie thermique nécessaire à la désacidification de la matière première, et
le four de cuisson (2) comprend une écluse de matière première (9;39) pouvant être fermé de manière étanche au gaz pour l'introduction par charges de la matière première dans un espace intérieur de four (14) et des moyens pour rincer l'écluse de matière première (9;39) avec du gaz de rinçage.

19. Procédé selon la revendication 18,
**caractérisé en ce que**
a) pour produire l'énergie thermique nécessaire à la désacidification de la matière première, on utilise au moins partiellement, de préférence exclusivement, de l'énergie électrique, de préférence de l'électricité verte,
et/ou
b) tous les gaz de processus de four introduits dans le four de cuisson (2) sont constitués de préférence de ≥ 80 % en masse, de manière particulièrement préférée de ≥ 90 % en masse, de manière tout particulièrement préférée de ≥ 98 % en masse de CO₂ et/ou ne comprennent pas d'oxygène.

20. Procédé selon la revendication 18 ou 19,
**caractérisé en ce que**
a) dans ou en dessous d'une zone de cuisson (11;37) du four de cuisson (2), on introduit du gaz chaud à une température suffisante pour désacidifier la matière première, de préférence à une température de 800 à 1250°C, de préférence de 900 à 1100°C,
et/ou
b) la matière première est chauffée dans une zone de cuisson (11;37) du four de cuisson (2) au moyen d'un dispositif de chauffage de la matière à cuire (30;43), le dispositif de chauffage de la matière à cuire (30;43) comprenant au moins un chauffage à commande électrique, de préférence un chauffage par résistance ou un chauffage par micro-ondes ou un chauffage par arc électrique, et/ou au moins un échangeur de chaleur.

21. Procédé selon l'une des revendications 18 à 20,
**caractérisé en ce que**
a) le procédé est un procédé de production de chaux vive, de magnésie ou de dolomie,
ou
b) le procédé fait partie d'un procédé de fabrication pour la production de clinker de ciment.

22. Procédé selon l'une des revendications 18 à 21,
**caractérisé en ce que**
a) le méthane produit par la méthanisation est transformé en hydrogène et en carbone solide par pyrolyse du méthane, et l'hydrogène produit par la pyrolyse du méthane est utilisé pour la méthanisation,
et/ou
b) la méthanisation d'au moins une partie du gaz d'échappement du four, de préférence de la totalité du gaz d'échappement du four, est effectuée par méthanogénèse.

23. Procédé selon l'une des revendications 18 à 22,
**caractérisé en ce que**
le gaz d'échappement du four comprend une teneur en CO₂ de ≥ 80 % en masse, de préférence de ≥ 90 % en masse, de manière particulièrement préférée de ≥ 98 % en masse.

24. Procédé selon l'une des revendications 18 à 23,
**caractérisé en ce que**
a) le gaz d'échappement du four est nettoyé des composants autres que le CO₂ avant la méthanisation,
et/ou
b) pour la méthanisation, on utilise en outre de l'hydrogène produit par électrolyse.

25. Procédé selon l'une des revendications 22 à 24,
**caractérisé en ce que**
du gaz naturel supplémentaire est utilisé pour la pyrolyse du méthane.

26. Procédé selon l'une des revendications 18 à 25,
**caractérisé en ce que**
pour la réalisation du procédé, un dispositif (1) selon l'une des revendications 1 à 17 est utilisé.
